(19) Europäisches Patentamt
European Patent Office
Office européen des brevets

(11) EP 2 014 170 A1

(12) # EUROPÄISCHE PATENTANMELDUNG

(43) Veröffentlichungstag:
**14.01.2009 Patentblatt 2009/03**

(51) Int Cl.:
***A01N 43/90*** *(2006.01)* ***A01P 13/00*** *(2006.01)*

(21) Anmeldenummer: **07112053.9**

(22) Anmeldetag: **09.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Bayer CropScience AG**
**40789 Monheim (DE)**

(72) Erfinder: **Die Erfindernennung liegt noch nicht vor**

(54) **Herbizid-Kombinationen mit speziellen 3-(2-Alkoxy-4-chlor-6-alkyl-phenyl)-substituierten Tetramaten**

(57) Herbizid-Kombinationen, gekennzeichnet durch einen wirksamen Gehalt an Komponenten (A) und (B), wobei
(A) ein oder mehrere Herbizide aus der Gruppe der Verbindungen der Formel (I) (Komponente A) bedeutet

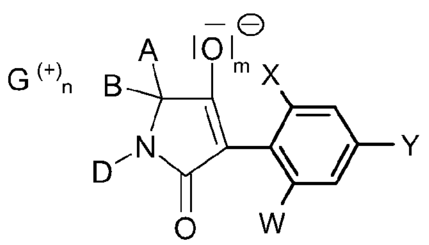

(I)

in welcher A, B, D, G, W, X, Y, m und n die in der Beschreibung angegebenen Bedeutungen besitzen
und
B) ein oder mehrere Verbindungen (Komponente B) aus den Gruppen B1 bis B12.

Die Erfindung betrifft außerdem Kombinationen die gegebenenfalls einen Safener enthalten.

EP 2 014 170 A1

## Beschreibung

Die Erfindung liegt auf dem technischen Gebiet der Pflanzenschutzmittel, die gegen Schad-pflanzen z.B. in Pflanzenkulturen eingesetzt werden können und als Wirkstoffe eine Kombination von mindestens zwei Herbiziden sowie gegebenenfalls zusätzlich die Kulturpflanzenverträglichkeit erhöhende Substanzen (Safener) enthalten.

In der WO 04/080962 sind 3-(2-Alkoxy-4-chlor-6-alkyl-phenyl)-substituierte Tetramsäuren, deren Herstellung sowie deren Verwendung als Herbizide und/oder Pflanzenwuchsregulatoren beschrieben. Der Zusatz von Safenem zu Tetramsäuren ist ebenfalls prinzipiell aus der WO 03/013249 bekannt. Weiterhin sind herbizide Mischungen mit 3-(2-Alkoxy-4-chlor-6-alkyl-phenyl)-substituierte Tetramsäuren aus WO 06/024411 bekannt. 3-(2-Alkoxy-4-chlor-6-alkyl-phenyl)-substituierte Tetramate sind aus EP-07009766.2 bekannt.

Die Wirksamkeit dieser Verbindungen als Herbizide gegen Schadpflanzen in den Pflanzenkulturen liegt auf einem hohen Niveau, hängt jedoch im allgemeinen von der Aufwandmenge, der jeweiligen Zubereitungsform, den jeweils zu bekämpfenden Schadpflanzen oder dem Schadpflanzenspektrum, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Schadpflanzen lassen sich nur bedingt durch höhere Aufwandmengen der Herbizide ausgleichen, z.B. weil damit häufig die Selektivität der Herbizide verschlechtert wird oder eine Wirkungsverbesserung auch bei höherer Aufwandmenge nicht eintritt. Teilweise kann die Selektivität in Kulturen durch Zusatz von Safenem verbessert werden. Generell besteht jedoch immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen. Allerdings treten bei der kombinierten Anwendung mehrerer Wirkstoffe nicht selten Phänomene der physikalischen und biologischen Unverträglichkeit auf, z.B. mangelnde Stabilität in einer Coformulierung, Zersetzung eines Wirkstoffes bzw. Antagonismus der Wirkstoffe oder ein verzögerter Abbau im Boden, der zu Schäden an Folgekulturen führen kann. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt. Vorteilhaft sind ebenfalls eine Verbreiterung des Wirkungsspektrums, eine Erhöhung der Anwendungsflexibilität sowie eine erhöhte Wirkungsgeschwindigkeit und die Eignung zur Bekämpfung Herbizid-resistenter Arten.

Überraschenderweise wurde nun gefunden, dass bestimmte Wirkstoffe aus der Gruppe der Ketoenole in Kombination mit bestimmten strukturell verschiedenen Herbiziden in besonders günstiger Weise zusammenwirken, z.B. wenn sie in Pflanzenkulturen eingesetzt werden, die für die selektive Anwendung der Herbizide, gegebenenfalls unter Zusatz von Safenem, geeignet sind.

Gegenstand der Erfindung sind Herbizid-Kombinationen mit einem wirksamen Gehalt an Komponenten (A) und (B), wobei

(A) ein oder mehrere Herbizide aus der Gruppe der Verbindungen der Formel (I) (Komponente A) bedeutet und

B) ein oder mehrere Verbindungen (Komponente B) aus den Gruppen B1 bis B12 bedeutet, welche die folgenden Verbindungen umfassen

### B1 Inhibitoren der Biosynthese von verzweigten Aminosäuren:

amidosulfuron (B1.1) und dessen Natriumsalz amidosulfuron-sodium (B1.2), chlorimuron (B1.3) und dessen Ester und Salze wie chlorimuron-ethyl (B1.4),
flazasulfuron (B1.5) und dessen Ester und Salze,
flucarbazone (B1.6) und dessen Salze wie flucarbazone-sodium (B1.7),
flupyrsulfuron (B1.8) und dessen Ester und Salze wie flupyrsulfuron-methyl-sodium (B1.9),
imazamethabenz (B1.10) und dessen Ester und Salze wie imazamethabenz-methyl (B1.11),
imazamox (B1.12) und dessen Ester und Salze,
imazypyr (B1.13) und dessen Ester und Salze,
iodosulfuron (B1.14) und dessen Ester und Salze wie iodosulfuron-methyl-sodium (B1.15),

mesosulfuron (B1.16) und dessen Ester und Salze wie mesosulfuron-methyl (B1.17) und mesosulfuron-methyl-sodium (B1.18),
metsulfuron (B1.19) und dessen Ester und Salze,
propoxycarbazone (B1.20) und dessen Salze wie propoxycarbazone-sodium (B1.21),
sulfometuron (B1.22) und dessen Ester und Salze wie sulfometuron-methyl (B1.23),
sulfosulfuron (B1.24) und dessen Salze,
thiencarbazone (B1.25) und dessen Ester und Salze wie thiencarbazone-methyl (B1.26)
thifensulfuron (B1.27) und dessen Ester und Salze wie thifensulfuron-methyl (B1.28),
triasulfuron (B1.29) und dessen Salze,
tribenuron (B1.30) und dessen Ester und Salze wie tribenuron-methyl (B1.31),
penoxsulam (B 1.32),
pyroxsulam (B 1.33),
ethametsulfuron-methyl (B 1.34),
ethoxysulfuron (B1.35), foramsulfuron (B1.36)
trifloxysulfuron (B1.37), pyrimisulfan (B1.38),
bispyrac-sodium (B1.39), bensulfuron (B1.40),
imazamox (B1.41), imazethapyr (B1.42), imazapic (B1.43), imazapyr (B1.44),
pyrithiobac (B1.45), florasulam (B1.46), diclosulam (B1.47), chlorsulfuron (B1.48), sulfosulfuron (B1.49),

**B2 Inhibitoren des Photosynthese Elektronen Transports:**

amicarbazone (B2.1) und dessen Salze,
atrazine (B2.2),
bromacil (B2.3) und dessen Salze wie bromacil-sodium (B2.4),
bromoxynil (B2.5) und dessen Ester und Salze wie bromoxynil-heptanoate (B2.6), bromoxyniloctanoate (B2.7) und bromoxynil-potassium (B2.8),
diuron (B2.9),
ioxynil (B2.10) und dessen Ester und Salze wie
ioxynil-octanoate (B 2.11) und ioxynil-sodium (B2.12),
isoproturon (B2.13), metribuzin (B2.14), simazine (B2.15), tebuthiuron (B2.16),
terbuthylazine (B2.17),
phenmedipham (B 2.18),
dismedipham (B 2.19),
dimefuron (B 2.20),
pyridate (B 2.21),
metamitron (B2.22), bentazon (B2.23),

**B3 Synthetische Auxine:**

2,4-D (B3.1) und dessen Ester und Salze wie 2,4-D-sodium (B3.2),
clopyralid (B3.3) und dessen Ester und Salze wie clopyralid-methyl (B3.4),
dicamba (B3.5) und dessen Ester und Salze wie dicamba-methyl (B3.6),
fluroxypyr (B3.7) und dessen Ester und Salze wie fluroxypyr-meptyl (B3.8)
picloram (B3.9) und dessen Ester und Salze wie picloram-methyl (B3.10),
quinclorac (B3.11), quinmerac (B3.12)
triclopyr (B3.13) und dessen Ester und Salze wie triclopyr-ethyl (B3.14),
MCPA (B3.15), CMPP (B3.16), DP (B3.17),
aminopyralid (B 3.18),

**B4 Inhibitoren der Fettsäurebiosynthese:**

clodinafop (B4.1) und dessen Ester wie clodinafop-propargyl (B4.2),

cyhalofop (B4.3) und dessen Ester wie cyhalofop-butyl (B4.4),
diclofop (B4.5) und dessen Ester wie diclofop-methyl (B4.6),
fenoxaprop (B4.7) und dessen Ester wie fenoxaprop-P-ethyl (B4.8),
fluazifop (B4.9) und dessen Ester wie fluazifop-P-butyl (B4.10),
haloxyfop (B4.11) und dessen Ester wie haloxyfop-P-methyl (B4.12),
pinoxaden (B4.13),
quizalofop (B4.14) und dessen Ester wie quizalofop-P-ethyl (B4.15),
clethodim (B4.16), sethoxydim (B4.17), tepraloxydim (B4.18),
tralkoxydim (B 4.19),
ethofumesate (B 4.20), clefoxydim (B4.21),

**B5 Inhibitoren der Zellteilung:**

acetochlor (B5.1), alachlor (B5.2), fentrazamide (B5.3), flufenacet (B5.4),
isoxaben (B5.5), mefenacet (B5.6), metazachlor (B5.7),
metolachlor (B5.8) und sein (S)-Stereoisomer S-metolachlor (B5.9),
thiazopyr (B5.10),
naproamide (B 5.11), pyroxasulfone (B5.12), dimethenamid (B5.13), carfenstrole (B5.14),

**B6 Inhibitoren der Fettsäurebiosynthese-Carotinoidbiosynthese:**

diflufenican (B6.1), clomazone (B6.2), picolinafen (B6.3), beflubutamid (B6.4),

**B7 Inhibitoren der Hydroxyphenylpyruvat-Dioxygenase:**

isoxaflutole (B7.1), mesotrione (B7.2), sulcotrione (B7.3),
pyrasulfotole (B7.4) und dessen Salze,
tembotrione (B7.5) und dessen Salze, tefuryltrione (B7.6) und dessen Salze,
topramezone (B7.7), benzobicyclon (B7.8), SYN449 (B7.9),

**B8 Inhibitoren der Protoporphyrinogenoxidase:**

azafenidin (B8.1), butafenacil (B8.2),
carfentrazone (8.3) und dessen Ester und Salze wie carfentrazone-ethyl (B8.4),
flumiclorac (B8.5) und dessen Ester und Salze wie flumiclorac-pentyl (B8.6),
fomesafen (B8.7) und dessen Salze wie fomesafen-sodium (B8.8),
lactofen (B8.9), oxadiargyl (B8.10), oxyfluorfen (B8.11),
SYN523 (B 8.12), aclonifen (B8.13), sulfentrazone (B8.14),

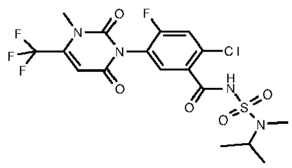

(B8.15),

**B9 Inhibitoren der Carotinoidbiosynthese:**

flurtamone (B9.2), norflurazon (B9.3),

**B10 Inhibitoren des Mikrotubuli-Aufbaus:**

oryzalin (B10.1), pendimethalin (B10.2), trifluralin (B10.3),
carbetamide (B 10.4),
propyzamide (B 10.5),

**B11 Andere**

diquat (B11.1) und dessen Salze wie diquat dibromide (B11.2),
paraquat (B11.3) und dessen Salze wie paraquat dichloride (B11.4),
naproanilide (B11.5), pyroxasulfone (B11.6), glyphosate (B11.7) und dessen Salze wie glyphosatetrimesium (B11.8) und sulfosate (B11.9), glufosinate (B11.10) und dessen Salze wie glufosinateammonium (B11.11) sowie deren optische Isomere wie phosphinotricin (B11.12),

**B12 Inhibitoren der Cellulosebiosynthese:**

2-Amino-4-(4-phenyl-1-cyclobutyl-butylamino)-6-(1-fluor-1-methyl-ethyl)-1,3,5-triazin (B12.1), 2-Amino-4-[(1*R*,2*S*)-2,6-dimethyl-indan-1-ylamino]-6-[(1*RS*)-1-fluorethyl]-1,3,5-triazin (B12.2), 2-Amino-4-[(1*R*,2*R*)-2,6-dimethyl-indan-1-ylamino]-6-[(1*RS*)-1-fluorethyl]-1,3,5-triazin (B12.3), 2-Amino-4-[(1*R*,2*S*)-2,6-dimethyl-indan-1-ylamino]-6-[(1*R*)-1-fluor-ethyl]-1,3,5-triazin (B12.4), 2-Amino-4-[(1*R*,2*R*)-2,6-dimethyl-indan-1-ylamino]-6-[(1*R*)-1-fluor-ethyl]-1,3,5-triazin (B12.5), 2-Amino-4-[(1*R*,2*S*)-2,6-dimethyl-indan-1-ylamino]-6-[(1*S*)-1-fluor-ethyl]-1,3,5-triazin (B12.6), triaziflam (B12.7), diclobenil (B12.8).

Die in dieser Beschreibung mit ihrem "common name" genannten Wirkstoffe sind beispielsweise aus "The Pesticide Manual" 13th Ed., British Crop Protection Council 2003, und der Webseite "http://www.alanwood.net/pesticides/" bekannt.

Wenn im Rahmen dieser Beschreibung die Kurzform des "common name" eines Wirkstoffs verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfaßten Verbindungen, häufig eine bevorzugte Verbindung. Bei Sulfonamiden wie Sulfonylharnstoffen sind mit Salzen auch die umfaßt, die durch Austausch eines Wasserstoffatoms an der Sulfonamidgruppe durch ein Kation entstehen.

Die erfindungsgemäßen Herbizid-Kombinationen weisen einen herbizid wirksamen Gehalt an Komponenten (A) und (B) auf und können weitere Komponenten enthalten, z. B. agrochemische Wirkstoffe anderer Art und/oder im Pflanzenschutz übliche Zusatzstoffe und/oder Formulierungshilfsmittel, oder zusammen mit diesen eingesetzt werden.

Die erfindungsgemäßen Herbizid-Kombinationen weisen in bevorzugter Ausführungsform synergistische Wirkungen auf. Die synergistischen Wirkungen können z.B. bei gemeinsamer Ausbringung der Wirkstoffe (A) und (B) beobachtet werden, sie können jedoch häufig auch bei zeitlich versetzter Anwendung (Splitting) festgestellt werden. Möglich ist auch die Anwendung der einzelnen Herbizide oder der Herbizid-Kombinationen in mehreren Portionen (Sequenzanwendung), z. B. Anwendungen im Vorauflauf, gefolgt von Nachauflauf-Applikationen oder frühe Nachauflaufanwendungen, gefolgt von Applikationen im mittleren oder späten Nachauflauf. Bevorzugt ist dabei die gemeinsame oder die zeitnahe Anwendung der Wirkstoffe der erfindungsgemäßen Herbizid-Kombination.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Wirkungsspektrums und des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Die Verbindungen der Gruppe A sind durch die Formel (I) definiert,

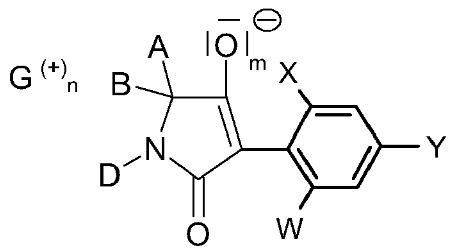

(I)

in welcher

X für Methoxy oder Ethoxy steht

W für Methyl oder Ethyl steht,

Y für Chlor steht,

G für Lithium, Natrium, oder Kalium steht,

m für die Zahl 1 steht,

n für die Zahl 1 steht,

A für $C_1$-$C_4$-Alkyl oder Cyclopropyl steht,

B für Methyl steht,

A, B und das Kohlenstoffatom an das sie gebunden sind, für gesättigtes $C_5$-$C_6$-Cycloalkyl, in welchem gegebenenfalls ein Ringglied durch Sauerstoff ersetzt ist und welches gegebenenfalls einfach durch Methyl, Methoxy oder Ethoxy substituiert ist, stehen

D für Wasserstoff steht,

oder
A und D gemeinsam für $C_3$-$C_4$-Alkylidenylgruppe stehen.

Bevorzugte Verbindungen der Komponente A sind die Verbindungen der Formel A1 - A17. Bevorzugte Verbindungen der Komponente B sind B1.1, B1.6, B1.14, B1.15, B1.16, B1.17, B1.20, B1.21, B1.25, B1.26, B1.27, B1.34, B2.1, B2.5, B2.10, B2.11, B2.18, B2.20, B2.21, B3.3, B3.18, B4.1, B4.7, B4.13, B4.20, B5.3, B5.4, B5.6, B5.7, B5.11, B6.1, B6.2, B7.4, B7.5, B8.5, B8.10, B8.11, B8.13, B9.2, B10.3, B10.4, B10.5, B11.5, B11.7, B 11.8, B11.10, B 11.11, B11.12.

Die Aufwandmenge der Wirkstoffe der Formel (I) kann in weiten Bereichen variieren, beispielsweise zwischen 10 und 500 g AS/ha. Soweit in dieser Beschreibung die Abkürzung AS/ha verwendet wird, bedeutet dies "Aktivsubstanz pro Hektar", bezogen auf 100%igen Wirkstoff. Bei Anwendungen mit Aufwandmengen von 10 bis 500 AS/ha der Wirkstoffe der Formel (I) wird im Vor- und Nachauflaufverfahren ein relativ breites Spektrum an annuellen und perennierenden Ungräsem sowie Cyperaceen bekämpft. Bei den erfindungsgemäßen Kombinationen liegen die Aufwandmengen in der Regel niedriger, z. B. im Bereich von 0,1 bis 200 g AS/ha, vorzugsweise 0,5 bis 100 g AS/ha.

Die im allgemeinen verwendeten Aufwandmengenverhältnisse der Komponenten (A):(B) sind nachstehend angegeben und bezeichnen das Gewichtsverhältnis der Komponenten (A):(B) zueinander. Das Gewichtsverhältnis der Komponenten (A) und (B) zueinander beträgt dabei im allgemeinen 1 : 3000 bis 5000 : 1, vorzugsweise 1 : 1200 bis 400 : 1.

Zur Anwendung der Wirkstoffe der Formel (I) in Pflanzenkulturen kann es je nach Pflanzenkultur zweckmäßig sein, ab bestimmter Aufwandmengen einen Safener zu applizieren, um eventuelle Schäden an der Kulturpflanze zu reduzieren oder zu vermeiden. Solche Safener sind dem Fachmann bekannt. Besonders gut geeignete Safener sind fenchlorazole-ethyl (S1), mefenpyr-diethyl (S2), isoxadifen-ethyl (S3), cyprosulfamide (S4), cloquintocet-mexyl (S5), fenclorim (S6), dichlormid (S7), benoxacor (S8), furilazol (S9), oxabetrinil (S10), fluxofenim (S11), flurazol (S12) und naphthalic anhydrid (S13).

Die Herbizide (A) und (B) sind, gegebenenfalls in Gegenwart von Safenem zur Bekämpfung von Schadpflanzen in Pflanzenkulturen geeignet, beispielsweise in wirtschaftlich bedeutenden Kulturen wie Getreide (z.B. Weizen, Gerste, Roggen, Hafer, Reis, Mais, Hirse), Zuckerrübe, Zuckerrohr, Raps, Baumwolle und Soja. Von besonderem Interesse ist dabei die Anwendung in dikotylen Kulturen wie Raps, Rüben, Baumwolle, Sonnenblumen, Sojabohne, Ackerbohne, Erbsen und diverse Gemüsearten. Außerdem ist die Anwendung bevorzugt in monokotylen Kulturen wie Getreide, insbesondere Weizen, Gerste, Roggen, Hafer, Kreuzungen davon wie Triticale, Reis, Mais und Hirse sowie im nichtselektiven Einsatz in Plantagenkulturen wie Obst, Wein, Oliven, Ölpalme oder für den Einsatz auf Nichtkulturflächen. Für die Kombinationen (A) + (B) + Safener sind diese Kulturen ebenfalls bevorzugt. Die erfindungsgemäßen Herbizid-Kombinationen können jeweils im Vor- oder Nachauflauf angewendet werden.

Erfindungsgemäß umfasst sind auch solche Herbizid-Kombinationen, die neben den Komponenten (A) und (B) noch ein oder mehrere weitere agrochemische Wirkstoffe anderer Struktur enthalten, wie Herbizide, Insektizide, Fungizide oder Safener. Für solche Kombinationen gelten die vor- und nachstehend insbesondere für erfindungsgemäße Kombinationen (A) und (B) erläuterten bevorzugten Bedingungen in erster Linie ebenfalls, sofern darin die erfindungsgemäßen Kombinationen (A) und (B) enthalten sind und bezüglich der betreffenden Kombination (A) und (B). Von besonderem Interesse sind Herbizid-Kombinationen mit einem Gehalt an folgenden Komponenten (A) + (B):

(A1 + B1.1), (A1 + B1.2), (A1 + B1.3), (A1 + B1.4), (A1 + B1.5), (A1 + B1.6),
(A1 + B1.7), (A1 + B1.8), (A1 + B1.9), (A1 + B1.10), (A1 + B1.11), (A1 + B1.12),
(A1 + B1.13), (A1 + B1.14), (A1 + B1.15), (A1 + B1.16), (A1 + B1.17), (A1 + B1.18),
(A1 + B1.19), (A1 + B1.20), (A1 + B1.21), (A1 + B1.22), (A1 + B1.23), (A1 + B1.24),
(A1 + B1.25), (A1 + B1.26), (A1 + B1.27), (A1 + B1.28), (A1 + B1.29), (A1 + B1.30),
(A1 + B1.31), (A1 + B1.32), (A1 + B1.33), (A1 + B1.34), (A1 + B1.35), (A1 + B1.36), (A1 + B1.37), (A1 + B1.38),
(A1 + B1.39), (A1 + B1.40), (A1 + B1.41), (A1 + B1.42), (A1 + B1.43),
(A1 + B1.44),), (A1 + B1.45), (A1 + B1.46), (A1 + B1.47), (A1 + B1.48), (A1 + B1.49),
(A1 + B2.1), (A1 + B2.2), (A1 + B2.3), (A1 + B2.4), (A1 + B2.5), (A1 + B2.6),
(A1 + B2.7), (A1 + B2.8), (A1 + B2.9), (A1 + B2.10), (A1 + B2.11), (A1 + B2.12),
(A1 + B2.13), (A1 + B2.14), (A1 + B2.15), (A1 + B2.16), (A1 + B2.17), (A1 + B2.18),
(A1 + B2.19), (A1 + B2.20), (A1 + B2.21), (A1 + B2.22), (A1 + B2.23),
(A1 + B3.1), (A1 + B3.2), (A1 + B3.3), (A1 + B3.4), (A1 + B3.5), (A1 + B3.6),
(A1 + B3.7), (A1 + B3.8), (A1 + B3.9), (A1 + B3.10), (A1 + B3.11), (A1 + B3.12),
(A1 + B3.13), (A1 + B3.14), (A1 + B3.15), (A1 + B3.16), (A1 + B3.17), (A1 + B3.18),
(A1 + B4.1), (A1 + 84.2), (A1 + B4.3), (A1 + B4.4), (A1 + B4.5), (A1 + B4.6),
(A1 + B4.7), (A1 + B4.8), (A1 + B4.9), (A1 + B4.10), (A1 + B4.11), (A1 + B4.12),
(A1 + B4.13), (A1 + B4.14), (A1 + B4.15), (A1 + B4.16), (A1 + B4.17), (A1 + B4.18),
(A1 + B4.19), (A1 + B4.20), (A1 + B4.21),
(A1 + B5.1), (A1 + B5.2), (A1 + B5.3), (A1 + B5.4), (A1 + B5.5), (A1 + B5.6),
(A1 + B5.7), (A1 + B5.8), (A1 + B5.9), (A1 + B5.10), (A1 + B5.11), (A1 + B5.12), (A1 + B5.13), (A1 + B5.14),
(A1 + B6.1), (A1 + B6.2), (A1 + B6.3), (A1 + B6.4),
(A1 + B7.1), (A1 + B7.2), (A1 + B7.3), (A1 + B7.4), (A1 + B7.5), (A1 + B7.6),
(A1 + B7.7), (A1 + B7.8), (A1 + B7.9),
(A1 + B8.1), (A1 + B8.2), (A1 + B8.3), (A1 + B8.4), (A1 + B8.5), (A1 + B8.6),
(A1 + B8.7), (A1 + B8.8), (A1 + B8.9), (A1 + B8.10), (A1 + B8.11), (A1 + B8.12), (A1 + B8.13),
(A1 + B8.14), (A1 + B 8.15),
(A1 + B9.2), (A1 + 89.3),
(A1 + B10.1), (A1 + B10.2), (A1 + B10.3), (A1 + B10.4), (A1 + B10.5),
(A1 + B11.1), (A1 + B11.2), (A1 + B11.3), (A1 + B11.4), (A1 + B11.5), (A1 + B11.6),
(A1 + B11.7), (A1 + B11.8), (A1 + B11.9), (A1 + B11.10), (A1 + B11.11), (A1 + B11.12),
(A1 + B12.1), (A1 + B12.2), (A1 + B12.3), (A1 + B12.4), (A1 + B12.5), (A1 + B12.6), (A1 + B12.7), (A1 + B12.8),

(A2 + B1.1), (A2 + B1.2), (A2 + B1.3), (A2 + B1.4), (A2 + B1.5), (A2 + B1.6),
(A2 + B1.7), (A2 + B1.8), (A2 + B1.9), (A2 + B1.10), (A2 + B1.11), (A2 + B1.12),
(A2 + B1.13), (A2 + B1.14), (A2 + B1.15), (A2 + B1.16), (A2 + B1.17), (A2 + B1.18),
(A2 + B1.19), (A2 + B1.20), (A2 + B1.21), (A2 + B1.22), (A2 + B1.23), (A2 + B1.24),
(A2 + B1.25), (A2 + B1.26), (A2 + B1.27), (A2 + B1.28), (A2 + B1.29), (A2 + B1.30),
(A2 + B1.31), (A2 + B1.32), (A2 + B1.33), (A2 + B1.34), (A2 + B1.35), (A2 + B1.36), (A2 + B1.37), (A2 + B1.38),
(A2 + B1.39), (A2 + B1.40), (A2 + B1.41), (A2 + B1.42), (A2 + B1.43),
(A2 + B1.44),), (A2 + B1.45), (A2 + B1.46), (A2 + B1.47), (A2 + B1.48), (A2 + B1.49),
(A2 + B2.1), (A2 + B2.2), (A2 + B2.3), (A2 + B2.4), (A2 + B2.5), (A2 + B2.6),

(A2 + B2.7), (A2 + B2.8), (A2 + B2.9), (A2 + B2.10), (A2 + B2.1 1), (A2 + B2.12),
(A2 + B2.13), (A2 + B2.14), (A2 + B2.15), (A2 + B2.16), (A2 + B2.17), (A2 + B2.18),
(A2 + B2.19), (A2 + B2.20), (A2 + B2.21), (A2 + B2.22), (A2 + B2.23),
(A2 + B3.1), (A2 + B3.2), (A2 + B3.3), (A2 + B3.4), (A2 + B3.5), (A2 + B3.6),
(A2 + B3.7), (A2 + B3.8), (A2 + B3.9), (A2 + B3.10), (A2 + B3.11), (A2 + B3.12),
(A2 + B3.13), (A2 + B3.14), (A2 + B3.15), (A2 + B3.16), (A2 + B3.17), (A2 + B3.18),
(A2 + B4.1), (A2 + B4.2), (A2 + B4.3), (A2 + B4.4), (A2 + B4.5), (A2 + B4.6),
(A2 + B4.7), (A2 + B4.8), (A2 + B4.9), (A2 + B4.10), (A2 + B4.11), (A2 + B4.12),
(A2 + B4.13), (A2 + B4.14), (A2 + B4.15), (A2 + B4.16), (A2 + B4.17), (A2 + B4.18),
(A2 + B4.19), (A2 + B4.20), (A2 + B4.21),
(A2 + B5.1), (A2 + B5.2), (A2 + B5.3), (A2 + B5.4), (A2 + B5.5), (A2 + B5.6),
(A2 + B5.7), (A2 + B5.8), (A2 + B5.9), (A2 + B5.10), (A2 + B5.11), (A2 + B5.12), (A2 + B5.13), (A2 + B5.14),

(A2 + B6.1), (A2 + B6.2), (A2 + B6.3), (A2 + B6.4),
(A2 + B7.1), (A2 + B7.2), (A2 + B7.3), (A2 + B7.4), (A2 + B7.5), (A2 + B7.6),
(A2 + B7.7), (A2 + B7.8), (A2 + B7.9),
(A2 + B8.1), (A2 + B8.2), (A2 + B8.3), (A2 + B8.4), (A2 + B8.5), (A2 + B8.6),
(A2 + B8.7), (A2 + B8.8), (A2 + B8.9), (A2 + B8.10), (A2 + B8.11), (A2 + B8.12), (A2 + B8.13),
(A2 + B8.14), (A2 + B8.15),
(A2 + B9.2), (A2 + B9.3),
(A2 + B10.1), (A2 + B10.2), (A2 + B10.3), (A2 + B10.4), (A2 + B10.5),
(A2 + B11.1), (A2 + B11.2), (A2 + B11.3), (A2 + B11.4), (A2 + B11.5), (A2 + B11.6),
(A2 + Bl1.7), (A2 + B11.8), (A2 + B11.9), (A2 + B11.10), (A2 + B11.11), (A2 + B11.12),
(A2 + B12.1), (A2 + B12.2), (A2 + B12.3), (A2 + B12.4), (A2 + B12.5), (A2 + B12.6), (A2 + B12.7), (A2 + B12.8),

(A3 + B1.1), (A3 + B1.2), (A3 + B1.3), (A3 + B1.4), (A3 + B1.5), (A3 + B1.6),
(A3 + B1.7), (A3 + B1.8), (A3 + B1.9), (A3 + B1.10), (A3 + B1.11), (A3 + B1.12),
(A3 + B1.13), (A3 + B1.14), (A3 + B1.15), (A3 + B1.16), (A3 + B1.17), (A3 + B1.18),
(A3 + B1.19), (A3 + B1.20), (A3 + B1.21), (A3 + B1.22), (A3 + B1.23), (A3 + B1.24),
(A3 + B1.25), (A3 + B1.26), (A3 + B1.27), (A3 + B1.28), (A3 + B1.29), (A3 + B1.30),
(A3 + B1.31), (A3 + B1.32), (A3 + B1.33), (A3 + B1.34), (A3 + B1.35), (A3 + B1.36), (A3 + B1.37), (A3 + B1.38),
(A3 + B1.39), (A3 + B1.40), (A3 + B1.41), (A3 + B1.42), (A3 + B1.43),
(A3 + B1.44),), (A3 + B1.45), (A3 + B1.46), (A3 + B1.47), (A3 + B1.48), (A3 + B1.49),
(A3 + B2.1), (A3 + B2.2), (A3 + B2.3), (A3 + B2.4), (A3 + B2.5), (A3 + B2.6),
(A3 + B2.7), (A3 + B2.8), (A3 + B2.9), (A3 + B2.10), (A3 + B2.11), (A3 + B2.12),
(A3 + B2.13), (A3 + B2.14), (A3 + B2.15), (A3 + B2.16), (A3 + B2.17), (A3 + B2.18),
(A3 + B2.19), (A3 + B2.20), (A3 + B2.21), (A3 + B2.22), (A3 + B2.23),
(A3 + B3.1), (A3 + B3.2), (A3 + B3.3), (A3 + B3.4), (A3 + B3.5), (A3 + B3.6),
(A3 + B3.7), (A3 + B3.8), (A3 + B3.9), (A3 + B3.10), (A3 + B3.11), (A3 + B3.12),
(A3 + B3.13), (A3 + B3.14), (A3 + B3.15), (A3 + B3.16), (A3 + B3.17), (A3 + B3.18),
(A3 + B4.1), (A3 + B4.2), (A3 + B4.3), (A3 + B4.4), (A3 + B4.5), (A3 + B4.6),
(A3 + B4.7), (A3 + B4.8), (A3 + B4.9), (A3 + B4.10), (A3 + B4.11), (A3 + B4.12),
(A3 + B4.13), (A3 + B4.14), (A3 + B4.15), (A3 + B4.16), (A3 + B4.17), (A3 + B4.18),
(A3 + B4.19), (A3 + B4.20), (A3 + B4.21),
(A3 + B5.1), (A3 + B5.2), (A3 + B5.3), (A3 + B5.4), (A3 + B5.5), (A3 + B5.6),
(A3 + B5.7), (A3 + B5.8), (A3 + B5.9), (A3 + B5.10), (A3 + B5.11), (A3 + B5.12), (A3 + B5.13), (A3 + B5.14),
(A3 + B6.1), (A3 + B6.2), (A3 + B6.3), (A3 + B6.4),
(A3 + B7.1), (A3 + B7.2), (A3 + B7.3), (A3 + B7.4), (A3 + B7.5), (A3 + B7.6),
(A3 + B7.7), (A3 + B7.8), (A3 + B7.9),
(A3 + B8.1), (A3 + B8.2), (A3 + B8.3), (A3 + B8.4), (A3 + B8.5), (A3 + B8.6),
(A3 + B8.7), (A3 + B8.8), (A3 + B8.9), (A3 + B8.10), (A3 + B8.11), (A3 + B8.12), (A3 + B8.13),
(A3 + B8.14), (A3 + B8.15),
(A3 + B9.2), (A3 + B9.3),
(A3 + B10.1), (A3 + B10.2), (A3 + B10.3), (A3 + B10.4), (A3 + B10.5),
(A3 + B11.1), (A3 + B11.2), (A3 + B11.3), (A3 + B11.4), (A3 + B11.5), (A3 + B11.6),
(A3 + B11.7), (A3 + B11.8), (A3 + B11.9), (A3 + B11.10), (A3 + B11.11), (A3 + B11.12),
(A3 + B12.1), (A3 + B12.2), (A3 + B12.3), (A3 + B12.4), (A3 + B12.5), (A3 + B12.6), (A3 + B12.7), (A3 + B12.8),

(A4 + B1.1), (A4 + B1.2), (A4 + B1.3), (A4 + B1.4), (A4 + B1.5), (A4 + B1.6),
(A4 + B1.7), (A4 + B1.8), (A4 + B1.9), (A4 + B1.10), (A4 + B1.11), (A4 + B1.12),
(A4 + B1.13), (A4 + B1.14), (A4 + B1.15), (A4 + B1.16), (A4 + B1.17), (A4 + B1.18),
(A4 + B1.19), (A4 + B1.20), (A4 + B1.21), (A4 + B1.22), (A4 + B1.23), (A4 + B1.24),
(A4 + B1.25), (A4 + B1.26), (A4 + B1.27), (A4 + B1.28), (A4 + B1.29), (A4 + B1.30),
(A4 + B1.31), (A4 + B1.32), (A4 + B1.33), (A4 + B1.34), (A1 + B1.35), (A4 + B1.36), (A4 + B1.37), (A4 + B1.38),
(A4 + B1.39), (A4 + B1.40), (A4 + B1.41), (A4 + B1.42), (A4 + B1.43),
(A4 + B1.44),), (A4 + B1.45), (A4 + B1.46), (A4 + B1.47), (A4 + B1.48), (A4 + B1.49),
(A4 + B2.1), (A4 + B2.2), (A4 + B2.3), (A4 + B2.4), (A4 + B2.5), (A4 + B2.6),
(A4 + B2.7), (A4 + B2.8), (A4 + B2.9), (A4 + B2.10), (A4 + B2.11), (A4 + B2.12),
(A4 + B2.13), (A4 + B2.14), (A4 + B2.15), (A4 + B2.16), (A4 + B2.17), (A4 + B2.18),
(A4 + B2.19), (A4 + B2.20), (A4 + B2.21), (A4 + B2.22), (A4 + B2.23),
(A4 + B3.1), (A4 + B3.2), (A4 + B3.3), (A4 + B3.4), (A4 + B3.5), (A4 + B3.6),
(A4 + B3.7), (A4 + B3.8), (A4 + B3.9), (A4 + B3.10), (A4 + B3.11), (A4 + B3.12),
(A4 + B3.13), (A4 + B3.14), (A4 + B3.15), (A4 + B3.16), (A4 + B3.17), (A4 + B3.18),
(A4 + B4.1), (A4 + B4.2), (A4 + B4.3), (A4 + B4.4), (A4 + B4.5), (A4 + B4.6),
(A4 + B4.7), (A4 + B4.8), (A4 + B4.9), (A4 + B4.10), (A4 + B4.11), (A4 + B4.12),
(A4 + B4.13), (A4 + B4.14), (A4 + B4.15), (A4 + B4.16), (A4 + B4.17), (A4 + B4.18),
(A4 + B4.19), (A4 + B4.20), (A4 + B4.21),
(A4 + B5.1), (A4 + B5.2), (A4 + B5.3), (A4 + B5.4), (A4 + B5.5), (A4 + B5.6),
(A4 + B5.7), (A4 + B5.8), (A4 + B5.9), (A4 + B5.10), (A4 + B5.11), (A4 + B5.12), (A4 + B5.13), (A4 + B5.14),
(A4 + B6.1), (A4 + B6.2), (A4 + B6.3), (A4 + B6.4),
(A4 + B7.1), (A4 + B7.2), (A4 + B7.3), (A4 + B7.4), (A4 + B7.5), (A4 + B7.6),
(A4 + B7.7), (A4 + B7.8), (A4 + B7.9),
(A4 + B8.1), (A4 + B8.2), (A4 + B8.3), (A4 + B8.4), (A4 + B8.5), (A4 + B8.6),
(A4 + B8.7), (A4 + B8.8), (A4 + B8.9), (A4 + B8.10), (A4 + B8.11), (A4 + B8.12), (A4 + B8.13),
(A4 + B8.14), (A4 + B8.15),
(A4 + B9.2), (A4 + B9.3),
(A4 + B10.1), (A4 + B10.2), (A4 + B10.3), (A4 + B10.4), (A4 + B10.5),
(A4 + B11.1), (A4 + B11.2), (A4 + B11.3), (A4 + B11.4), (A4 + B11.5), (A4 + B11.6),
(A4 + B11.7), (A4 + B11.8), (A4 + B11.9), (A4 + B11.10), (A4 + B11.11), (A4 + B11.12),
(A4 + B12.1), (A4 + B12.2), (A4 + B12.3), (A4 + B12.4), (A4 + B12.5), (A4 + B12.6), (A4 + B12.7), (A4 + B12.8),

(A5 + B1.1), (A5 + B1.2), (A5 + B1.3), (A5 + B1.4), (A5 + B1.5), (A5 + B1.6),
(A5 + B1.7), (A5 + B1.8), (A5 + B1.9), (A5 + B1.10), (A5 + B1.11), (A5 + B1.12),
(A5 + B1.13), (A5 + B1.14), (A5 + B1.15), (A5 + B1.16), (A5 + B1.17), (A5 + B1.18),
(A5 + B1.19), (A5 + B1.20), (A5 + B1.21), (A5 + B1.22), (A5 + B1.23), (A5 + B1.24),
(A5 + B1.25), (A5 + B1.26), (A5 + B1.27), (A5 + B1.28), (A5 + B1.29), (A5 + B1.30),
(A5 + B1.31), (A5 + B1.32), (A5 + B1.33), (A5 + B1.34), (A5 + B1.35), (A5 + B1.36), (A5 + B1.37), (A5 + B1.38),
(A5 + B1.39), (A5 + B1.40), (A5 + B1.41), (A5 + B1.42), (A5 + B1.43),
(A5 + B1.44),), (A5 + B1.45), (A5 + B1.46), (A5 + B1.47), (A5 + B1.48), (A5 + B1.49),
(A5 + B2.1), (A5 + B2.2), (A5 + B2.3), (A5 + B2.4), (A5 + B2.5), (A5 + B2.6),
(A5 + B2.7), (A5 + B2.8), (A5 + B2.9), (A5 + B2.10), (A5 + B2.11), (A5 + B2.12),
(A5 + B2.13), (A5 + B2.14), (A5 + B2.15), (A5 + B2.16), (A5 + B2.17), (A5 + B2.18),
(A5 + B2.19), (A5 + B2.20), (A5 + B2.21), (A5 + B2.22), (A5 + B2.23),
(A5 + B3.1), (A5 + B3.2), (A5 + B3.3), (A5 + B 3.4), (A5 + B3.5), (A5 + B3.6),
(A5 + B3.7), (A5 + B3.8), (A5 + B3.9), (A5 + B3.10), (A5 + B3.11), (A5 + B3.12),
(A5 + B3.13), (A5 + B3.14), (A5 + B3.15), (A5 + B3.16), (A5 + B3.17), (A5 + B3.18),
(A5 + B4.1), (A5 + B4.2), (A5 + B4.3), (A5 + B4.4), (A5 + B4.5), (A5 + B4.6),
(A5 + B4.7), (A5 + B4.8), (A5 + B4.9), (A5 + B4.10), (A5 + B4.11), (A5 + B4.12),
(A5 + B4.13), (A5 + B4.14), (A5 + B4.15), (A5 + B4.16), (A5 + B4.17), (A5 + B4.18),
(A5 + B4.19), (A5 + B4.20), (A5 + B4.21),
(A5 + B5.1), (A5 + B5.2), (A5 + B5.3), (A5 + B5.4), (A5 + B5.5), (A5 + B5.6),
(A5 + B5.7), (A5 + B5.8), (A5 + B5.9), (A5 + B5.10), (A5 + B5.11), (A5 + B5.12), (A5 + B5.13), (A5 + B5.14),
(A5 + B6.1), (A5 + B6.2), (A5 + B6.3), (A5 + B6.4),
(A5 + B7.1), (A5 + B7.2), (A5 + B7.3), (A5 + B7.4), (A5 + B7.5), (A5 + B7.6),
(A5 + B7.7), (A5 + B7.8), (A5 + B7.9),
(A5 + B8.1), (A5 + B8.2), (A5 + B8.3), (A5 + B8.4), (A5 + B8.5), (A5 + B8.6),

(A5 + B8.7), (A5 + B8.8), (A5 + B8.9), (A5 + B8.10), (A5 + B8.11), (A5 + B8.12), (A5 + B8.13),
(A5 + B8.14), (A5 + B8.15),
(A5 + B9.2), (A5 + B9.3),
(A5 + B10.1), (A5 + B10.2), (A5 + B10.3), (A5 + B10.4), (A5 + B10.5),
(A5 + B11.1), (A5 + B11.2), (A5 + B11.3), (A5 + B11.4), (A5 + B11.5), (A5 + B11.6),
(A5 + B11.7), (A5 + B11.8), (A5 + B11.9), (A5 + B11.10), (A5 + B11.11), (A5 + B11.12),
(A5 + B12.1), (A5 + B12.2), (A5 + B12.3), (A5 + B12.4), (A5 + B12.5), (A5 + B12.6), (A5 + B12.7), (A5 + B12.8),

(A6 + B1.1), (A6 + B1.2), (A6 + B1.3), (A6 + B1.4), (A6 + B1.5), (A6 + B1.6),
(A6 + B1.7), (A6 + B1.8), (A6 + B1.9), (A6 + B1.10), (A6 + B1.11), (A6 + B1.12),
(A6 + B1.13), (A6 + B1.14), (A6 + B1.15), (A6 + B1.16), (A6 + B1.17), (A6 + B1.18),
(A6 + B1.19), (A6 + B1.20), (A6 + B1.21), (A6 + B1.22), (A6 + B1.23), (A6 + B1.24),
(A6 + B1.25), (A6 + B1.26), (A6 + B1.27), (A6 + B1.28), (A6 + B1.29), (A6 + B1.30),
(A6 + B1.31), (A6 + B1.32), (A6 + B1.33), (A6 + B1.34), (A6 + B1.35), (A6 + B1.36), (A6 + B1.37), (A6 + B1.38),
(A6 + B1.39), (A6 + B1.40), (A6 + B1.41), (A6 + B1.42), (A6 + B1.43),
(A6 + B1.44),), (A6 + B1.45), (A6 + B1.46), (A6 + B1.47), (A6 + B1.48), (A6 + B1.49),
(A6 + 82.1), (A6 + B2.2), (A6 + B2.3), (A6 + B2.4), (A6 + B2.5), (A6 + B2.6),
(A6 + B2.7), (A6 + B2.8), (A6 + B2.9), (A6 + B2.10), (A6 + B2.11), (A6 + B2.12),
(A6 + B2.13), (A6 + B2.14), (A6 + B2.15), (A6 + B2.16), (A6 + B2.17), (A6 + B2.18),
(A6 + B2.19), (A6 + B2.20), (A6 + B2.21), (A6 + B2.22), (A6 + B2.23),
(A6 + B3.1), (A6 + B3.2), (A6 + B3.3), (A6 + B3.4), (A6 + B3.5), (A6 + B3.6),
(A6 + B3.7), (A6 + B3.8), (A6 + B3.9), (A6 + B3.10), (A6 + B3.11), (A6 + B3.12),
(A6 + B3.13), (A6 + B3.14), (A6 + B3.15), (A6 + B3.16), (A6 + B3.17), (A6 + B3.18),
(A6 + B4.1), (A6 + B4.2), (A6 + B4.3), (A6 + B4.4), (A6 + B4.5), (A6 + B4.6),
(A6 + B4.7), (A6 + B4.8), (A6 + B4.9), (A6 + B4.10), (A6 + B4.11), (A6 + B4.12),
(A6 + B4.13), (A6 + B4.14), (A6 + B4.15), (A6 + B4.16), (A6 + B4.17), (A6 + B4.18),
(A6 + B4.19), (A6 + B4.20), (A6 + B4.21),
(A6 + B5.1), (A6 + B5.2), (A6 + B5.3), (A6 + B5.4), (A6 + B5.5), (A6 + B5.6),
(A6 + B5.7), (A6 + B5.8), (A6 + B5.9), (A6 + B5.10), (A6 + B5.11), (A6 + B5.12), (A6 + B5.13), (A6 + B5.14),
(A6 + B6.1), (A6 + B6.2), (A6 + B6.3), (A6 + B6.4),
(A6 + B7.1), (A6 + B7.2), (A6 + B7.3), (A6 + B7.4), (A6 + B7.5), (A6 + B7.6),
(A6 + B7.7), (A6 + B7.8), (A6 + B7.9),
(A6 + B8.1), (A6 + B8.2), (A6 + B8.3), (A6 + B8.4), (A6 + B8.5), (A6 + B8.6),
(A6 + B8.7), (A6 + B8.8), (A6 + B8.9), (A6 + B8.10), (A6 + B8.11), (A6 + B8.12), (A6 + B8.13),
(A6 + B8.14), (A6 + B8.15),
(A6 + B9.2), (A6 + B9.3),
(A6 + B10.1), (A6 + B10.2), (A6 + B10.3), (A6 + B10.4), (A6 + B10.5),
(A6 + B11.1), (A6 + B11.2), (A6 + B11.3), (A6 + B11.4), (A6 + B11.5), (A6 + B11.6),
(A6 + B11.7), (A6 + B11.8), (A6 + B11.9), (A6 + B11.10), (A6 + B11.11), (A6 + B11.12),
(A6 + B12.1), (A6 + B12.2), (A6 + B12.3), (A6 + B12.4), (A6 + B12.5), (A6 + B12.6), (A6 + B12.7), (A6 + B12.8),

(A7 + B1.1), (A7 + B1.2), (A7 + B1.3), (A7 + B1.4), (A7 + B1.5), (A7 + B1.6),
(A7 + B1.7), (A7 + B1.8), (A7 + B1.9), (A7 + B1.10), (A7 + B1.11), (A7 + B1.12),
(A7 + B1.13), (A7 + B1.14), (A7 + B1.15), (A7 + B1.16), (A7 + B1.17), (A7 + B1.18),
(A7 + B1.19), (A7 + B1.20), (A7 + B1.21), (A7 + B1.22), (A7 + B1.23), (A7 + B1.24),
(A7 + B1.25), (A7 + B1.26), (A7 + B1.27), (A7 + B1.28), (A7 + B1.29), (A7 + B1.30),
(A7 + B1.31), (A7 + B1.32), (A7 + B1.33), (A7 + B1.34), (A7 + B1.35), (A7 + B1.36), (A7 + B1.37), (A7 + B1.38),
(A7 + B1.39), (A7 + B1.40), (A7 + B1.41), (A7 + B1.42), (A7 + B1.43),
(A7 + B1.44),), (A7 + B1.45), (A7 + B1.46), (A7 + B1.47), (A7 + B1.48), (A7 + B1.49),
(A7 + B2.1), (A7 + B2.2), (A7 + B2.3), (A7 + B2.4), (A7 + B2.5), (A7 + B2.6),
(A7 + B2.7), (A7 + B2.8), (A7 + B2.9), (A7 + B2.10), (A7 + B2.11), (A7 + B2.12),
(A7 + B2.13), (A7 + B2.14), (A7 + B2.15), (A7 + B2.16), (A7 + B2.17), (A7 + B2.18),
(A7 + B2.19), (A7 + B2.20), (A7 + B2.21), (A7 + B2.22), (A7 + B2.23),
(A7 + B3.1), (A7 + B3.2), (A7 + B3.3), (A7 + B3.4), (A7 + B3.5), (A7 + B3.6),
(A7 + B3.7), (A7 + B3.8), (A7 + B3.9), (A7 + B3.10), (A7 + B3.11), (A7 + B3.12),
(A7 + B3.13), (A7 + B3.14), (A7 + B3.15), (A7 + B3.16), (A7 + B3.17), (A7 + B3.18),
(A7 + B4.1), (A7 + B4.2), (A7 + B4.3), (A7 + B4.4), (A7 + B4.5), (A7 + B4.6),
(A7 + B4.7), (A7 + B4.8), (A7 + B4.9), (A7 + B4.10), (A7 + B4.11), (A7 + B4.12),

(A7 + B4.13), (A7 + B4.14), (A7 + B4.15), (A7 + B4.16), (A7 + B4.17), (A7 + B4.18),
(A7 + B4.19), (A7 + B4.20), (A7 + B4.21),
(A7 + B5.1), (A7 + B5.2), (A7 + B5.3), (A7 + B5.4), (A7 + B5.5), (A7 + B5.6),
(A7 + B5.7), (A7 + B5.8), (A7 + B5.9), (A7 + B5.10), (A7 + B5.11), (A7 + B5.12), (A7 + B5.13), (A7 + B5.14),
(A7 + B6.1), (A7 + B6.2), (A7 + B6.3), (A7 + B6.4),
(A7 + B7.1), (A7 + B7.2), (A7 + B7.3), (A7 + B7.4), (A7 + B7.5), (A7 + B7.6),
(A7 + B7.7), (A7 + B7.8), (A7 + B7.9),
(A7 + B8.1), (A7 + B8.2), (A7 + B8.3), (A7 + B8.4), (A7 + B8.5), (A7 + B8.6),
(A7 + B8.7), (A7 + B8.8), (A7 + B8.9), (A7 + B8.10), (A7 + B8.11), (A7 + B8.12), (A7 + B8.13),
(A7 + B8.14), (A7 + B8.15),
(A7 + B9.2), (A7 + B9.3),
(A7 + B10.1), (A7 + B10.2), (A7 + B10.3), (A7 + B10.4), (A7 + B10.5),
(A7 + B11.1), (A7 + B11.2), (A7 + B11.3), (A7 + B11.4), (A7 + B11.5), (A7 + B11.6),
(A7 + B11.7), (A7 + B11.8), (A7 + B11.9), (A7 + B11.10), (A7 + B11.11), (A7 + B11.12),
(A7 + B12.1), (A7 + B12.2), (A7 + B12.3), (A7 + B12.4), (A7 + B12.5), (A7 + B12.6), (A7 + B12.7), (A7 + B12.8),

(A8 + B1.1), (A8 + B1.2), (A8 + B1.3), (A8 + B1.4), (A8 + B1.5), (A8 + B1.6),
(A8 + B1.7), (A8 + B1.8), (A8 + B1.9), (A8 + B1.10), (A8 + B1.11), (A8 + B1.12),
(A8 + B1.13), (A8 + B1.14), (A8 + B1.15), (A8 + B1.16), (A8 + B1.17), (A8 + B1.18),
(A8 + B1.19), (A8 + B1.20), (A8 + B1.21), (A8 + B1.22), (A8 + B1.23), (A8 + B1.24),
(A8 + B1.25), (A8 + B1.26), (A8 + B1.27), (A8 + B1.28), (A8 + B1.29), (A8 + B1.30),
(A8 + B1.31), (A8 + B1.32), (A8 + B1.33), (A8 + B1.34), (A8 + B1.35), (A8 + B1.36), (A8 + B1.37), (A8 + B1.38),
(A8 + B1.39), (A8 + B1.40), (A8 + B1.41), (A8 + B1.42), (A8 + B1.43),
(A8 + B1.44),), (A8 + B1.45), (A8 + B1.46), (A8 + B1.47), (A8 + B1.48), (A8 + B1.49),
(A8 + B2.1), (A8 + B2.2), (A8 + B2.3), (A8 + B2.4), (A8 + B2.5), (A8 + B2.6),
(A8 + B2.7), (A8 + B2.8), (A8 + B2.9), (A8 + B2.10), (A8 + B2.11), (A8 + B2.12),
(A8 + B2.13), (A8 + B2.14), (A8 + B2.15), (A8 + B2.16), (A8 + B2.17), (A8 + B2.18),
(A8 + B2.19), (A8 + B2.20), (A8 + B2.21), (A8 + B2.22), (A8 + B2.23),
(A8 + B3.1), (A8 + B3.2), (A8 + B3.3), (A8 + B3.4), (A8 + B3.5), (A8 + B3.6),
(A8 + B3.7), (A8 + B3.8), (A8 + B3.9), (A8 + B3.10), (A8 + B3.11), (A8 + B3.12),
(A8 + B3.13), (A8 + B3.14), (A8 + B3.15), (A8 + B3.16), (A8 + B3.17), (A8 + B3.18)
(A8 + B4.1), (A8 + B4.2), (A8 + B4.3), (A8 + B4.4), (A8 + B4.5), (A8 + B4.6),
(A8 + B4.7), (A8 + B4.8), (A8 + B4.9), (A8 + B4.10), (A8 + B4.11), (A8 + B4.12),
(A8 + B4.13), (A8 + B4.14), (A8 + B4.15), (A8 + B4.16), (A8 + B4.17), (A8 + B4.18),
(A8 + B4.19), (A8 + B4.20), (A8 + B4.21),
(A8 + B5.1), (A8 + B5.2), (A8 + B5.3), (A8 + B5.4), (A8 + B5.5), (A8 + B5.6),
(A8 + B5.7), (A8 + B5.8), (A8 + B5.9), (A8 + B5.10), (A8 + B5.11), (A8 + B5.12), (A8 + B5.13), (A8 + B5.14),
(A8 + B6.1), (A8 + B6.2), (A8 + B6.3), (A8 + B6.4),
(A8 + B7.1), (A8 + B7.2), (A8 + B7.3), (A8 + B7.4), (A8 + B7.5), (A8 + B7.6),
(A8 + B7.7), (A8 + B7.8), (A8 + B7.9),
(A8 + B8.1), (A8 + B8.2), (A8 + B8.3), (A8 + B 8.4), (A8 + B8.5), (A8 + B8.6),
(A8 + B8.7), (A8 + B8.8), (A8 + B8.9), (A8 + B8.10), (A8 + B8.11), (A8 + B8.12), (A8 + B8.13),
(A8 + B8.14), (A8 + B8.15),
(A8 + B9.2), (A8 + B9.3),
(A8 + B10.1), (A8 + B10.2), (A8 + B10.3), (A8 + B10.4), (A8 + B10.5),
(A8 + B11.1), (A8 + B11.2), (A8 + B11.3), (A8 + B11.4), (A8 + B11.5), (A8 + B11.6),
(A8 + B11.7), (A8 + B11.8), (A8 + B11.9), (A8 + B11.10), (A8 + B11. 11), (A8 + B11.12),
(A8 + B12.1), (A8 + B12.2), (A8 + B12.3), (A8 + B12.4), (A8 + B12.5), (A8 + B12.6), (A8 + B12.7), (A8 + B12.8),

(A9 + B1.1), (A9 + B1.2), (A9 + B1.3), (A9 + B1.4), (A9 + B1.5), (A9 + B1.6),
(A9 + B1.7), (A9 + B1.8), (A9 + B1.9), (A9 + B1.10), (A9 + B1.11), (A9 + B1.12),
(A9 + B1.13), (A9 + B1.14), (A9 + B1.15), (A9 + B1.16), (A9 + B1.17), (A9 + B1.18),
(A9 + B1.19), (A9 + B1.20), (A9 + B1.21), (A9 + B1.22), (A9 + B1.23), (A9 + B1.24),
(A9 + B1.25), (A9 + B1.26), (A9 + B1.27), (A9 + B1.28), (A9 + B1.29), (A9 + B1.30),
(A9 + B1.31), (A9 + B1.32), (A9 + B1.33), (A9 + B1.34), (A9 + B1.35), (A9 + B1.36), (A9 + B1.37), (A9 + B1.38),
(A9 + B1.39), (A9 + B1.40), (A9 + B1.41), (A9 + B1.42), (A9 + B1.43),
(A9 + B1.44),), (A9 + B1.45), (A9 + B1.46), (A9 + B1.47), (A9 + B1.48), (A9 + B1.49),
(A9 + B2.1), (A9 + B2.2), (A9 + B2.3), (A9 + B2.4), (A9 + B2.5), (A9 + B2.6),

(A9 + B2.7), (A9 + B2.8), (A9 + B2.9), (A9 + B2.10), (A9 + B2.11), (A9 + B2.12), (A9 + B2.13), (A9 + B2.14), (A9 + B2.15), (A9 + B2.16), (A9 + B2.17), (A9 + B2.18), (A9 + B2.19), (A9 + B2.20), (A9 + B2.21), (A9 + B2.22), (A9 + B2.23), (A9 + B3.1), (A9 + B3.2), (A9 + B3.3), (A9 + B3.4), (A9 + B3.5), (A9 + B3.6), (A9 + B3.7), (A9 + B3.8), (A9 + B3.9), (A9 + B3.10), (A9 + B3.11), (A9 + B3.12), (A9 + B3.13), (A9 + B3.14), (A9 + B3.15), (A9 + B3.16), (A9 + B3.17), (A9 + B3.18) (A9 + B4.1), (A9 + B4.2), (A9 + B4.3), (A9 + B4.4), (A9 + B4.5), (A9 + B4.6), (A9 + B4.7), (A9 + B4.8), (A9 + B4.9), (A9 + B4.10), (A9 + B4.11), (A9 + B4.12), (A9 + B4.13), (A9 + B4.14), (A9 + B4.15), (A9 + B4.16), (A9 + B4.17), (A9 + B4.18), (A9 + B4.19), (A9 + B4.20), (A9 + B4.21), (A9 + B5.1), (A9 + B5.2), (A9 + B5.3), (A9 + B5.4), (A9 + B5.5), (A9 + B5.6), (A9 + B5.7), (A9 + B5.8), (A9 + B5.9), (A9 + B5.10), (A9 + B5.11), (A9 + B5.12), (A9 + B5.13), (A9 + B5.14), (A9 + B6.1), (A9 + B6.2), (A9 + B6.3), (A9 + B6.4), (A9 + B7.1), (A9 + B7.2), (A9 + B7.3), (A9 + B7.4), (A9 + B7.5), (A9 + B7.6), (A9 + B7.7), (A9 + B7.8), (A9 + B7.9), (A9 + B8.1), (A9 + B8.2), (A9 + B8.3), (A9 + B8.4), (A9 + B8.5), (A9 + B8.6), (A9 + B8.7), (A9 + B8.8), (A9 + B8.9), (A9 + B8.10), (A9 + B8.11), (A9 + B8.12), (A9 + B8.13), (A9 + B8.14), (A9 + B8.15), (A9 + B9.2), (A9 + B9.3), (A9 + B10.1), (A9 + B10.2), (A9 + B10.3), (A9 + B10.4), (A9 + B10.5), (A9 + B11.1), (A9 + B11.2), (A9 + B11.3), (A9 + B11.4), (A9 + B11.5), (A9 + B11.6), (A9 + B11.7), (A9 + B11.8), (A9 + B11.9), (A9 + B11.10),(A9 + B11.11), (A9 + B11.12), (A9 + B12.1), (A9 + B12.2), (A9 + B12.3), (A9 + B12.4), (A9 + B12.5), (A9 + B12.6), (A9 + B12.7), (A9 + B12.8),

(A10 + B1.1), (A10 + B1.2), (A10 + B1.3), (A10 + B1.4), (A10 + B1.5), (A10 + B1.6), (A10 + B1.7), (A10 + B1.8), (A10 + B1.9), (A10 + B1.10), (A10 + B1.11), (A10 + B1.12), (A10 + B1.13), (A10 + B1.14), (A10 + B1.15), (A10 + B1.16), (A10 + B1.17), (A10 + B1.18), (A10 + B1.19), (A10 + B1.20), (A10 + B1.21), (A10 + B1.22), (A10 + B1.23), (A10 + B1.24), (A10 + B1.25), (A10 + B1.26), (A10 + B1.27), (A10 + B1.28), (A10 + B1.29), (A10 + B1.30), (A10 + B1.31), (A10 + B1.32), (A10 + B1.33), (A10 + B1.34), (A10 + B1.35), (A10 + B1.36), (A10 + B1.37), (A10 + B1.38), (A10 + B1.39), (A10 + B1.40), (A10 + B1.41), (A10 + B1.42), (A10 + B1.43), (A10 + B1.44),), (A10 + B1.45), (A10 + B1.46), (A10 + B1.47), (A10 + B1.48), (A10 + B1.49), (A10 + B2.1), (A10 + B2.2), (A10 + B2.3), (A10 + B2.4), (A10 + B2.5), (A10 + B2.6), (A10 + B2.7), (A10 + B2.8), (A10 + B2.9), (A10 + B2.10), (A10 + B2.11), (A10 + B2.12), (A10 + B2.13), (A10 + B2.14), (A10 + B2.15), (A10 + B2.16), (A10 + B2.17), (A10 + B2.18), (A10 + B2.19), (A10 + B2.20), (A10 + B2.21), (A10 + B2.22), (A10 + B2.23), (A10 + B3.1), (A10 + B3.2), (A10 + B3.3), (A10 + B3.4), (A10 + B3.5), (A10 + B3.6), (A10 + B3.7), (A10 + B3.8), (A10 + B3.9), (A10 + B3.10), (A10 + B3.11), (A10 + B3.12), (A10 + B3.13), (A10 + B3.14), (A10 + B3.15), (A10 + B3.16), (A10 + B3.17), (A10 + B3.18) (A10 + B4.1), (A10 + B4.2), (A10 + B4.3), (A10 + B4.4), (A10 + B4.5), (A10 + B4.6), (A10 + B4.7), (A10 + B4.8), (A10 + B4.9), (A10 + B4.10), (A10 + B4.11), (A10 + B4.12), (A10 + B4.13), (A10 + B4.14), (A10 + B4.15), (A10 + B4.16), (A10 + B4.17), (A10 + B4.18), (A10 + B4.19), (A10 + B4.20), (A10 + B4.21), (A10 + B5.1), (A10 + B5.2), (A10 + B5.3), (A10 + B5.4), (A10 + B5.5), (A10 + B5.6), (A10 + B5.7), (A10 + B5.8), (A10 + B5.9), (A10 + B5.10), (A10 + B5.11), (A10 + B5.12), (A10 + B5.13), (A10 + B5.14), (A10 + B6.1), (A10 + B6.2), (A10 + B6.3), (A10 + B6.4), (A10 + B7.1), (A10 + B7.2), (A10 + B7.3), (A10 + B7.4), (A10 + B7.5), (A10 + B7.6), (A10 + B7.7), (A10 + B7.8), (A10 + B7.9), (A10 + B8.1), (A10 + B8.2), (A10 + B8.3), (A10 + B8.4), (A10 + B8.5), (A10 + B8.6), (A10 + B8.7), (A10 + B8.8), (A10 + B8.9), (A10 + B8.10), (A10 + B8.11), (A10 + B8.12), (A10 + B8.13), (A10 + B8.14), (A10 + B8.15), (A10 + B9.2), (A10 + B9.3), (A10 + B10.1), (A10 + B10.2), (A10 + B10.3), (A10 + B10.4), (A10 + B10.5), (A10 + B11.1), (A10 + B11.2), (A10 + B11.3), (A10 + B11.4), (A10 + B11.5), (A10 + B11.6), (A10 + B11.7), (A10 + B11.8), (A10 + B11.9), (A10 + B11.10), (A10 + B11.11), (A10 + B11.12), (A10 + B12.1), (A10 + B12.2), (A10 + B12.3), (A10 + B12.4), (A10 + B12.5), (A10 + B12.6), (A10 + B12.7), (A10 + B12.8),

(A11 + B1.1), (A11 + B1.2), (A11 + B1.3), (A11 + B1.4), (A11 + B1.5), (A11 + B1.6), (A11 + B1.7), (A11 + B1.8), (A11 + B1.9), (A11 + B1.10), (A11 + B1.11), (A11 + B1.12), (A11 + B1.13), (A11 + B1.14), (A11 + B1.15), (A11 + B1.16), (A11 + B1.17), (A11 + B1.18), (A11 + B1.19), (A11 + B1.20), (A11 + B1.21), (A11 + B1.22), (A11 + B1.23), (A11 + B1.24), (A11 + B1.25), (A11 + B1.26), (A11 + B1.27), (A11 + B1.28), (A11 + B1.29), (A11 + B1.30), (A11 + B1.31), (A11 + B1.32), (A11 + B1.33), (A11 + B1.34), (A11 + B1.35), (A11 + B1.36), (A11 + B1.37), (A11 + B1.38), (A11 + B1.39), (A11 + B1.40), (A11 + B1.41), (A11 + B1.42), (A11 + B1.43), (A11 + B1.44),), (A11 + B1.45), (A11 + B1.46), (A11 + B1.47), (A11 + B1.48), (A11 + B1.49), (A11 + B2.1), (A11 + B2.2), (A11 + B2.3), (A11 + B2.4), (A11 + B2.5), (A11 + B2.6), (A11 + B2.7), (A11 + B2.8), (A11 + B2.9), (A11 + B2.10), (A11 + B2.11), (A11 + B2.12), (A11 + B2.13), (A11 + B2.14), (A11 + B2.15), (A11 + B2.16), (A11 + B2.17), (A11 + B2.18), (A11 + B2.19), (A11 + B2.20), (A11 + B2.2 1), (A11 + B2.22), (A11 + B2.23), (A11 + B3.1), (A11 + B3.2), (A11 + B3.3), (A11 + B3.4), (A11 + B3.5), (A11 + B3.6), (A11 + B3.7), (A11 + B3.8), (A11 + B3.9), (A11 + B3.10), (A11 + B3.11), (A11 + B3.12), (A11 + B3.13), (A11 + B3.14), (A11 + B3.15), (A11 + B3.16), (A11 + B3.17), (A11 + B3.18) (A11 + B4.1), (A11 + B4.2), (A11 + B4.3), (A11 + B4.4), (A11 + B4.5), (A11 + B4.6), (A11 + B4.7), (A11 + B4.8), (A11 + B4.9), (A11 + B4.10), (A11 + B4.1 1), (A11 + B4.12), (A11 + B4.13), (A11 + B4.14), (A11 + B4.15), (A11 + B4.16), (A11 + B4.17), (A11 + B4.18), (A11 + B4.19), (A11 + B4.20), (A11 + B4.2 1), (A11 + B5.1), (A11 + B5.2), (A11 + B5.3), (A11 + B5.4), (A11 + B5.5), (A11 + B5.6), (A11 + B5.7), (A11 + B5.8), (A11 + B5.9), (A11 + B5.10), (A11 + B5.11), (A11 + B5.12), (A11 + B5.13), (A11 + B5.14), (A11 + B6.1), (A11 + B6.2), (A11 + B6.3), (A11 + B6.4), (A11 + B7.1), (A11 + B7.2), (A11 + B7.3), (A11 + B7.4), (A11 + B7.5), (A11 + B7.6), (A11 + B7.7), (A11 + B7.8), (A11 + B7.9), (A11 + B8.1), (A11 + B8.2), (A11 + B8.3), (A11 + B8.4), (A11 + B8.5), (A11 + B8.6), (A11 + B8.7), (A11 + B8.8), (A11 + B8.9), (A11 + B8.10), (A11 + B8.11), (A11 + B8.12), (A11 + B8.13), (A11 + B8.14), (A11 + B8.15), (A11 + B9.2), (A11 + B9.3), (A11 + B10.1), (A11 + B10.2), (A11 + B10.3), (A11 + B10.4), (A11 + B10.5), (A11 + B11.1), (A11 + B11.2), (A11 + B11.3), (A11 + B11.4), (A11 + B11.5), (A11 + B11.6), (A11 + B11.7), (A11 + B11.8), (A11 + B11.9), (A11 + B11.10), (A11 + B11.11), (A11 + B11.12), (A11 + B12.1), (A11 + B12.2), (A11 + B12.3), (A11 + B12.4), (A11 + B12.5), (A11 + B12.6), (A11 + B12.7), (A11 + B12.8),

(A12 + B1.1), (A12 + B1.2), (A12 + B1.3), (A12 + B1.4), (A12 + B1.5), (A12 + B1.6), (A12 + B1.7), (A12 + B1.8), (A12 + B1.9), (A12 + B1.10), (A12 + B1.11), (A12 + B1.12), (A12 + B1.13), (A12 + B1.14), (A12 + B1.15), (A12 + B1.16), (A12 + B1.17), (A12 + B1.18), (A12 + B1.19), (A12 + B1.20), (A12 + B1.21), (A12 + B1.22), (A12 + B1.23), (A12 + B1.24), (A12 + B1.25), (A12 + B1.26), (A12 + B1.27), (A12 + B1.28), (A12 + B1.29), (A12 + B1.30), (A12 + B1.31), (A12 + B1.32), (A12 + B1.33), (A12 + B1.34), (A12 + B1.35), (A12 + B1.36), (A12 + B1.37), (A12 + B1.38), (A12 + B1.39), (A12 + B1.40), (A12 + B1.41), (A12 + B1.42), (A12 + B1.43), (A12 + B1.44),), (A12 + B1.45), (A12 + B1.46), (A12 + B1.47), (A12 + B1.48), (A12 + B1.49), (A12 + B2.1), (A12 + B2.2), (A12 + B2.3), (A12 + B2.4), (A12 + B2.5), (A12 + B2.6), (A12 + B2.7), (A12 + B2.8), (A12 + B2.9), (A12 + B2.10), (A12 + B2.11), (A12 + B2.12), (A12 + B2.13), (A12 + B2.14), (A12 + B2.15), (A12 + B2.16), (A12 + B2.17), (A12 + B2.18), (A12 + B2.19), (A12 + B2.20), (A12 + B2.21), (A12 + B2.22), (A12 + B2.23), (A12 + B3.1), (A12 + B3.2), (A12 + B3.3), (A12 + B3.4), (A12 + B3.5), (A12 + B3.6), (A12 + B3.7), (A12 + B3.8), (A12 + B3.9), (A12 + B3.10), (A12 + B3.11), (A12 + B3.12), (A12 + B3.13), (A12 + B3.14), (A12 + B3.15), (A12 + B3.16), (A12 + B3.17), (A12 + B3.18) (A12 + B4.1), (A12 + B4.2), (A12 + B4.3), (A12 + B4.4), (A12 + B4.5), (A12 + B4.6), (A12 + B4.7), (A12 + B4.8), (A12 + B4.9), (A12 + B4.10), (A12 + B4.11), (A12 + B4.12), (A12 + B4.13), (A12 + B4.14), (A12 + B4.15), (A12 + B4.16), (A12 + B4.17), (A12 + B4.18), (A12 + B4.19), (A12 + B4.20), (A12 + B4.21), (A12 + B5.1), (A12 + B5.2), (A12 + B5.3), (A12 + B5.4), (A12 + B5.5), (A12 + B5.6), (A12 + B5.7), (A12 + B5.8), (A12 + B5.9), (A12 + B5.10), (A12 + B5.11), (A12 + B5.12), (A12 + B5.13), (A12 + B5.14), (A12 + B6.1), (A12 + B6.2), (A12 + B6.3), (A12 + B6.4), (A12 + B7.1), (A12 + B7.2), (A12 + B7.3), (A12 + B7.4), (A12 + B7.5), (A12 + B7.6),

(A12 + B7.7), (A12 + B7.8), (A12 + B7.9),
(A12 + B8.1), (A12 + B8.2), (A12 + B8.3), (A12 + B8.4), (A12 + B8.5), (A12 + B8.6),
(A12 + B8.7), (A12 + B8.8), (A12 + B8.9), (A12 + B8.10), (A12 + B8.11), (A12 + B8.12), (A12 + B8.13), (A12 + B8.14), (A12 + B8.15),
(A12 + B9.2), (A12 + B9.3),
(A12 + B10.1), (A12 + B10.2), (A12 + B10.3), (A12 + B10.4), (A12 + B10.5),
(A12 + B11.1), (A12 + B11.2), (A12 + B11.3), (A12 + B11.4), (A12 + B11.5), (A12 + B11.6),
(A12 + B11.7), (A12 + B11.8), (A12 + B11.9), (A12 + B11.10), (A12 + B11.11), (A12 + B11.12),
(A12 + B12.1), (A12 + B12.2), (A12 + B12.3), (A12 + B12.4), (A12 + B12.5), (A12 + B12.6),
(A12 + B12.7), (A12 + B12.8),

(A13 + B1.1), (A13 + B1.2), (A13 + B1.3), (A13 + B1.4), (A13 + B1.5), (A13 + B1.6),
(A13 + B1.7), (A13 + B1.8), (A13 + B1.9), (A13 + B1.10), (A13 + B1.11), (A13 + B1.12),
(A13 + B1.13), (A13 + B1.14), (A13 + B1.15), (A13 + B1.16), (A13 + B1.17), (A13 + B1.18),
(A13 + B1.19), (A13 + B1.20), (A13 + B1.21), (A13 + B1.22), (A13 + B1.23), (A13 + B1.24),
(A13 + B1.25), (A13 + B1.26), (A13 + B1.27), (A13 + B1.28), (A13 + B1.29), (A13 + B1.30),
(A13 + B1.31), (A13 + B1.32), (A13 + B1.33), (A13 + B1.34), (A13 + B1.35), (A13 + B1.36),
(A13 + B1.37), (A13 + B1.38), (A13 + B1.39), (A13 + B1.40), (A13 + B1.41), (A13 + B1.42),
(A13 + B1.43), (A13 + B1.44),,), (A13 + B1.45), (A13 + B1.46), (A13 + B1.47), (A13 + B1.48),
(A13 + B1.49),
(A13 + B2.1), (A13 + B2.2), (A13 + B2.3), (A13 + B2.4), (A13 + B2.5), (A13 + B2.6),
(A13 + B2.7), (A13 + B2.8), (A13 + B2.9), (A13 + B2.10), (A13 + B2.11), (A13 + B2.12),
(A13 + B2.13), (A13 + B2.14), (A13 + B2.15), (A13 + B2.16), (A13 + B2.17), (A13 + B2.18),
(A13 + B2.19), (A13 + B2.20), (A13 + B2.21), (A13 + B2.22), (A13 + B2.23),
(A13 + B3.1), (A13 + B3.2), (A13 + B3.3), (A13 + B3.4), (A13 + B3.5), (A13 + B3.6),
(A13 + B3.7), (A13 + B3.8), (A13 + B3.9), (A13 + B3.10), (A13 + B3.11), (A13 + B3.12),
(A13 + B3.13), (A13 + B3.14), (A13 + B3.15), (A13 + B3.16), (A13 + B3.17), (A13 + B3.18)
(A13 + B4.1), (A13 + B4.2), (A13 + B4.3), (A13 + B4.4), (A13 + B4.5), (A13 + B4.6),
(A13 + B4.7), (A13 + B4.8), (A13 + B4.9), (A13 + B4.10), (A13 + B4.11), (A13 + B4.12),
(A13 + B4.13), (A13 + B4.14), (A13 + B4.15), (A13 + B4.16), (A13 + B4.17), (A13 + B4.18),
(A13 + B4.19), (A13 + B4.20), (A13 + B4.21),
(A13 + B5.1), (A13 + B5.2), (A13 + B5.3), (A13 + B5.4), (A13 + B5.5), (A13 + B5.6),
(A13 + B5.7), (A13 + B5.8), (A13 + B5.9), (A13 + B5.10), (A13 + B5.11), (A13 + B5.12), (A13 + B5.13), (A13 + B5.14),
(A13 + B6.1), (A13 + B6.2), (A13 + B6.3), (A13 + B6.4),
(A13 + B7.1), (A13 + B7.2), (A13 + B7.3), (A13 + B7.4), (A13 + B7.5), (A13 + B7.6),
(A13 + B7.7), (A13 + B7.8), (A13 + B7.9),
(A13 + B8.1), (A13 + B8.2), (A13 + B8.3), (A13 + B8.4), (A13 + B8.5), (A13 + B8.6),
(A13 + B8.7), (A13 + B8.8), (A13 + B8.9), (A13 + B8.10), (A13 + B8.11), (A13 + B8.12), (A13 + B8.13), (A13 + B8.14), (A13 + B8.15),
(A13 + B9.2), (A13 + B9.3),
(A13 + B10.1), (A13 + B10.2), (A13 + B10.3), (A13 + B10.4), (A13 + B10.5),
(A13 + B11.1), (A13 + B11.2), (A13 + B11.3), (A13 + B11.4), (A13 + B11.5), (A13 + B11.6),
(A13 + B11.7), (A13 + B11.8, (A13 + B11.9), (A13 + B11.10), (A13 + B11.11), (A13 + B11.12),
(A13 + B12.1), (A13 + B12.2), (A13 + B12.3), (A13 + B12.4), (A13 + B12.5), (A13 + B12.6),
(A13 + B12.7), (A13 + B12.8),

(A14 + B1.1), (A14 + B1.2), (A14 + B1.3), (A14 + B1.4), (A14 + B1.5), (A14 + B1.6),
(A14 + B1.7), (A14 + B1.8), (A14 + B1.9), (A14 + B1.10), (A14 + B1.1 1), (A14 + B1.12),
(A14 + B1.13), (A14 + B1.14), (A14 + B1.15), (A14 + B1.16), (A14 + B1.17), (A14 + B1.18),
(A14 + B1.19), (A14 + B1.20), (A14 + B1.21), (A14 + B1.22), (A14 + B1.23), (A14 + B1.24),
(A14 + B1.25), (A14 + B1.26), (A14 + B1.27), (A14 + B1.28), (A14 + B1.29), (A14 + B1.30),
(A14 + B1.31), (A14 + B1.32), (A14 + B1.33), (A14 + B1.34), (A14 + B1.35), (A14 + B1.36),
(A14 + B1.37), (A14 + B1.38), (A14 + B1.39), (A14 + B1.40), (A14 + B1.41), (A14 + B1.42),
(A14 + B1.43), (A14 + B1.44),,), (A14 + B1.45), (A14 + B1.46), (A14 + B1.47), (A14 + B1.48),
(A14 + B1.49),
(A14 + B2.1), (A14 + B2.2), (A14 + B2.3), (A14 + B2.4), (A14 + B2.5), (A14 + B2.6),
(A14 + B2.7), (A14 + B2.8), (A14 + B2.9), (A14 + B2.10), (A14 + B2.11), (A14 + B2.12),
(A14 + B2.13), (A14 + B2.14), (A14 + B2.15), (A14 + B2.16), (A14 + B2.17), (A14 + B2.18),

(A14 + B2.19), (A14 + B2.20), (A14 + B2.21), (A14 + B2.22), (A14 + B2.23),
(A14 + B3.1), (A14 + B3.2), (A14 + B3.3), (A14 + B3.4), (A14 + B3.5), (A14 + B3.6),
(A14 + B3.7), (A14 + B3.8), (A14 + B3.9), (A14 + B3.10), (A14 + B3.11), (A14 + B3.12),
(A14 + B3.13), (A14 + B3.14), (A14 + B3.15), (A14 + B3.16), (A14 + B3.17), (A14 + B3.18)
(A14 + B4.1), (A14 + B4.2), (A14 + B4.3), (A14 + B4.4), (A14 + B4.5), (A14 + B4.6),
(A14 + B4.7), (A14 + B4.8), (A14 + B4.9), (A14 + B4.10), (A14 + B4.11), (A14 + B4.12),
(A14 + B4.13), (A14 + B4.14), (A14 + B4.15), (A14 + B4.16), (A14 + B4.17), (A14 + B4.18),
(A14 + B4.19), (A14 + B4.20), (A14 + B4.21),
(A14 + B5.1), (A14 + B5.2), (A14 + B5.3), (A14 + B5.4), (A14 + B5.5), (A14 + B5.6),
(A14 + B5.7), (A14 + B5.8), (A14 + B5.9), (A14 + B5.10), (A14 + B5.11), (A14 + B5.12), (A14 + B5.13), (A14 + B5.14),
(A14 + B6.1), (A14 + B6.2), (A14 + B6.3), (A14 + B6.4),
(A14 + B7.1), (A14 + B7.2), (A14 + B7.3), (A14 + B7.4), (A14 + B7.5), (A14 + B7.6),
(A14 + B7.7), (A14 + B7.8), (A14 + B7.9),
(A14 + B8.1), (A14 + B8.2), (A14 + B8.3), (A14 + B8.4), (A14 + B8.5), (A14 + B8.6),
(A14 + B8.7), (A14 + B8.8), (A14 + B8.9), (A14 + B8.10), (A14 + B8.11), (A14 + B8.12), (A14 + B8.13), (A14 + B8.14), (A14 + B8.15),
(A14 + B9.2), (A14 + B9.3),
(A14 + B10.1), (A14 + B10.2), (A14 + B10.3), (A14 + B10.4), (A14 + B10.5),
(A14 + B11.1), (A14 + B11.2), (A14 + B11.3), (A14 + B11.4), (A14 + B11.5, (A14 + B11.6),
(A14 + B11.7), (A14 + B11.8), (A14 + B11.9), (A14 + B11.10),(A14 + B11.11), (A14 + B11.12),
(A14 + B12.1), (A14 + B12.2), (A14 + B12.3), (A14 + B12.4), (A14 + B12.5), (A14 + B12.6),
(A14 + B12.7), (A14 + B12.8),

(A15 + B1.1), (A15 + B1.2), (A15 + B1.3), (A15 + B1.4), (A15 + B1.5), (A15 + B1.6),
(A15 + B1.7), (A15 + B1.8), (A15 + B1.9), (A15 + B1.10), (A15 + B1.11), (A15 + B1.12),
(A15 + B1.13), (A15 + B1.14), (A15 + B1.15), (A15 + B1.16), (A15 + B1.17), (A15 + B1.18),
(A15 + B1.19), (A15 + B1.20), (A15 + B1.21), (A15 + B1.22), (A15 + B1.23), (A15 + B1.24),
(A15 + B1.25), (A15 + B1.26), (A15 + B1.27), (A15 + B1.28), (A15 + B1.29), (A15 + B1.30),
(A15 + B1.31), (A15 + B1.32), (A15 + B1.33), (A15 + B1.34), (A15 + B1.35), (A15 + B1.36),
(A15 + B1.37), (A15 + B1.38), (A15 + B1.39), (A15 + B1.40), (A15 + B1.41), (A15 + B1.42),
(A15 + B1.43), (A15 + B1.44),), (A15 + B1.45), (A15 + B1.46), (A15 + B1.47), (A15 + B1.48), (A15 + B1.49),
(A15 + B2.1), (A15 + B2.2), (A15 + B2.3), (A15 + B2.4), (A15 + B2.5), (A15 + B2.6),
(A15 + B2.7), (A15 + B2.8), (A15 + B2.9), (A15 + B2.10), (A15 + B2.11), (A15 + B2.12),
(A15 + B2.13), (A15 + B2.14), (A15 + B2.15), (A15 + B2.16), (A15 + B2.17), (A15 + B2.18),
(A15 + B2.19), (A15 + B2.20), (A15 + B2.21), (A15 + B2.22), (A15 + B2.23),
(A15 + B3.1), (A15 + B3.2), (A15 + B3.3), (A15 + B3.4), (A15 + B3.5), (A15 + B3.6),
(A15 + B3.7), (A15 + B3.8), (A15 + B3.9), (A15 + B3.10), (A15 + B3.11), (A15 + B3.12),
(A15 + B3.13), (A15 + B3.14), (A15 + B3.15), (A15 + B3.16), (A15 + B3.17), (A15 + B3.18)
(A15 + B4.1), (A15 + B4.2), (A15 + B4.3), (A15 + B4.4), (A15 + B4.5), (A15 + B4.6),
(A15 + B4.7), (A15 + B4.8), (A15 + B4.9), (A15 + B4.10), (A15 + B4.11), (A15 + B4.12),
(A15 + B4.13), (A15 + B4.14), (A15 + B4.15), (A15 + B4.16), (A15 + B4.17), (A15 + B4.18),
(A15 + B4.19), (A15 + B4.20), (A15 + B4.21),
(A15 + B5.1), (A15 + B5.2), (A15 + B5.3), (A15 + B5.4), (A15 + B5.5), (A15 + B5.6),
(A15 + B5.7), (A15 + B5.8), (A15 + B5.9), (A15 + B5.10), (A15 + B5.11), (A15 + B5.12), (A15 + B5.13), (A15 + B5.14),
(A15 + B6.1), (A15 + B6.2), (A15 + B6.3), (A15 + B6.4),
(A15 + B7.1), (A15 + B7.2), (A15 + B7.3), (A15 + B7.4), (A15 + B7.5), (A15 + B7.6),
(A15 + B7.7), (A15 + B7.8), (A15 + B7.9),
(A15 + B8.1), (A15 + B8.2), (A15 + B8.3), (A15 + B8.4), (A15 + B8.5), (A15 + B8.6),
(A15 + B8.7), (A15 + B8.8), (A15 + B8.9), (A15 + B8.10), (A15 + B8.11), (A15 + B8.12), (A15 + B8.13), (A15 + B8.14), (A15 + B8.15),
(A15 + B9.2), (A15 + B9.3),
(A15 + B10.1), (A15 + B10.2), (A15 + B10.3), (A15 + B10.4), (A15 + B10.5),
(A15 + B11.1), (A15 + B11.2), (A15 + B11.3), (A15 + B11.4), (A15 + B11.5), (A15 + B11.6),
(A15 + B11.7), (A15 + B11.8), (A15 + B11.9), (A15 + B11.10), (A15 + B11.11), (A15 + B11.12),
(A15 + B12.1), (A15 + B12.2), (A15 + B12.3), (A15 + B12.4), (A15 + B12.5), (A15 + B12.6),
(A15 + B12.7), (A15 + B12.8),

(A16 + B1.1), (A16 + B1.2), (A16 + B1.3), (A16 + B1.4), (A16 + B1.5), (A16 + B1.6),

(A16 + B1.7), (A16 + B1.8), (A16 + B1.9), (A16 + B1.10), (A16 + B1.1 1), (A16 + B1.12), (A16 + B1.13), (A16 + B1.14), (A16 + B1.15), (A16 + B1.16), (A16 + B1.17), (A16 + B1.18), (A16 + B1.19), (A16 + B1.20), (A16 + B1.21), (A16 + B1.22), (A16 + B1.23), (A16 + B1.24), (A16 + B1.25), (A16 + B1.26), (A16 + B1.27), (A16 + B1.28), (A16 + B1.29), (A16 + B1.30), (A16 + B1.31), (A16 + B1.32), (A16 + B1.33), (A16 + B1.34), (A16 + B1.35), (A16 + B1.36), (A16 + B1.37), (A16 + B1.38), (A16 + B1.39), (A16 + B1.40), (A16 + B1.41), (A16 + B1.42), (A16 + B1.43), (A16 + B1.44),), (A16 + B1.45), (A16 + B1.46), (A16 + B1.47), (A16 + B1.48), (A16 + B1.49),
(A16 + B2.1), (A16 + B2.2), (A16 + B2.3), (A16 + B2.4), (A16 + B2.5), (A16 + B2.6), (A16 + B2.7), (A16 + B2.8), (A16 + B2.9), (A16 + B2.10), (A16 + B2.11), (A16 + B2.12), (A16 + B2.13), (A16 + B2.14), (A16 + B2.15), (A16 + B2.16), (A16 + B2.17), (A16 + B2.18), (A16 + B2.19), (A16 + B2.20), (A16 + B2.21), (A16 + B2.22), (A16 + B2.23),
(A16 + B3.1), (A16 + B3.2), (A16 + B3.3), (A16 + B3.4), (A16 + B3.5), (A16 + B3.6), (A16 + B3.7), (A16 + B3.8), (A16 + B3.9), (A16 + B3.10), (A16 + B3.11), (A16 + B3.12), (A16 + B3.13), (A16 + B3.14), (A16 + B3.15), (A16 + B3.16), (A16 + B3.17), (A16 + B3.18)
(A16 + B4.1), (A16 + B4.2), (A16 + B4.3), (A16 + B4.4), (A16 + B4.5), (A16 + B4.6), (A16 + B4.7), (A16 + B4.8), (A16 + B4.9), (A16 + B4.10), (A16 + B4.11), (A16 + B4.12), (A16 + B4.13), (A16 + B4.14), (A16 + B4.15), (A16 + B4.16), (A16 + B4.17), (A16 + B4.18), (A16 + B4.19), (A16 + B4.20), (A16 + B4.21),
(A16 + B5.1), (A16 + B5.2), (A16 + B5.3), (A16 + B5.4), (A16 + B5.5), (A16 + B5.6), (A16 + B5.7), (A16 + B5.8), (A16 + B5.9), (A16 + B5.10), (A16 + B5.11), (A16 + B5.12), (A16 + B5.13), (A16 + B5.14),
(A16 + B6.1), (A16 + B6.2), (A16 + B6.3), (A16 + B6.4),
(A16 + B7.1), (A16 + B7.2), (A16 + B7.3), (A16 + B7.4), (A16 + B7.5), (A16 + B7.6), (A16 + B7.7), (A16 + B7.8), (A16 + B7.9),
(A16 + B8.1), (A16 + B8.2), (A16 + B8.3), (A16 + B8.4), (A16 + B8.5), (A16 + B8.6), (A16 + B8.7), (A16 + B8.8), (A16 + B8.9), (A16 + B8.10), (A16 + B8.11), (A16 + B8.12), (A16 + B8.13), (A16 + B8.14), (A16 + B8.15),
(A16 + B9.2), (A16 + B9.3),
(A16 + B10.1), (A16 + B10.2), (A16 + B10.3), (A16 + B10.4), (A16 + B10.5),
(A16 + B11.1), (A16 + B11.2), (A16 + B11.3), (A16 + B11.4), (A16 + B11.5), (A16 + B11.6), (A16 + B11.7), (A16 + B11.8), (A16 + B11.9), (A16 + B11.10), (A16 + B11.11), (A16 + B11.12),
(A16 + B12.1), (A16 + B12.2), (A16 + B12.3), (A16 + B12.4), (A16 + B12.5), (A16 + B12.6), (A16 + B12.7), (A16 + B12.8),

(A17 + B1.1), (A17 + B1.2), (A17 + B1.3), (A17 + B1.4), (A17 + B1.5), (A17 + B1.6), (A17 + B1.7), (A17 + B1.8), (A17 + B1.9), (A17 + B1.10), (A17 + B1.1 1), (A17 + B1.12), (A17 + B1.13), (A17 + B1.14), (A17 + B1.15), (A17 + B1.16), (A17 + B1.17), (A17 + B1.18), (A17 + B1.19), (A17 + B1.20), (A17 + B1.21), (A17 + B1.22), (A17 + B1.23), (A17 + B1.24), (A17 + B1.25), (A17 + B1.26), (A17 + B1.27), (A17 + B1.28), (A17 + B1.29), (A17 + B1.30), (A17 + B1.31), (A17 + B1.32), (A17 + B1.33), (A17 + B1.34), (A17 + B1.35), (A17 + B1.36), (A17 + B1.37), (A17 + B1.38), (A17 + B1.39), (A17 + B1.40), (A17 + B1.41), (A17 + B1.42), (A17 + B1.43), (A17 + B1.44),), (A17 + B1.45), (A17 + B1.46), (A17 + B1.47), (A17 + B1.48), (A17 + B1.49),
(A17 + B2.1), (A17 + B2.2), (A17 + B2.3), (A17 + B2.4), (A17 + B2.5), (A17 + B2.6), (A17 + B2.7), (A17 + B2.8), (A17 + B2.9), (A17 + B2.10), (A17 + B2.11), (A17 + B2.12), (A17 + B2.13), (A17 + B2.14), (A17 + B2.15), (A17 + B2.16), (A17 + B2.17), (A17 + B2.18), (A17 + B2.19), (A17 + B2.20), (A17 + B2.21), (A17 + B2.22), (A17 + B2.23),
(A17 + B3.1), (A17 + B3.2), (A17 + B3.3), (A17 + B3.4), (A17 + B3.5), (A17 + B3.6), (A17 + B3.7), (A17 + B3.8), (A17 + B3.9), (A17 + B3.10), (A17 + B3.11), (A17 + B3.12), (A17 + B3.13), (A17 + B3.14), (A17 + B3.15), (A17 + B3.16), (A17 + B3.17), (A17 + B3.18)
(A17 + B4.1), (A17 + B4.2), (A17 + B4.3), (A17 + B4.4), (A17 + B4.5), (A17 + B4.6), (A17 + B4.7), (A17 + B4.8), (A17 + B4.9), (A17 + B4.10), (A17 + B4.11), (A17 + B4.12), (A17 + B4.13), (A17 + B4.14), (A17 + B4.15), (A17 + B4.16), (A17 + B4.17), (A17 + B4.18), (A17 + B4.19), (A17 + B4.20), (A17 + B4.21),
(A17 + B5.1), (A17 + B5.2), (A17 + B5.3), (A17 + B5.4), (A17 + B5.5), (A17 + B5.6), (A17 + B5.7), (A17 + B5.8), (A17 + B5.9), (A17 + B5.10), (A17 + B5.11), (A17 + B5.12), (A17 + B5.13), (A17 + B5.14),
(A17 + B6.1), (A17 + B6.2), (A17 + B6.3), (A17 + B6.4),
(A17 + B7.1), (A17 + B7.2), (A17 + B7.3), (A17 + B7.4), (A17 + B7.5), (A17 + B7.6),

(A17 + B7.7), (A17 + B7.8), (A17 + B7.9),
(A17 + B8.1), (A17 + B8.2), (A17 + B8.3), (A17 + B8.4), (A17 + B8.5), (A17 + B8.6),
(A17 + B8.7), (A17 + B8.8), (A17 + B8.9), (A17 + B8.10), (A17 + B8.11), (A17 + B8.12), (A17 + B8.13), (A17 + B8.14), (A17 + B8.15),
(A17 + B9.2), (A17 + B9.3),
(A17 + B10.1), (A17 + B10.2), (A17 + B10.3), (A17 + B10.4), (A17 + B10.5),
(A17 + B11.1), (A17 + B11.2), (A17 + B11.3), (A17 + B11.4), (A17 + B11.5), (A17 + B11.6),
(A17 + B11.7), (A17 + B11.8), (A17 + B11.9), (A17 + B11.10), (A17 + B11.11), (A17 + B11.12),
(A17 + B12.1), (A17 + B12.2), (A17 + B12.3), (A17 + B12.4), (A17 + B12.5), (A17 + B12.6),
(A17 + B12.7), (A17 + B12.8).

Besonders bevorzugt sind Herbizid-Kombinationen mit einem Gehalt an folgenden Komponenten (A) + (B):

(A1 + B1.1), (A1 + B1.6), (A1 + B1.14), (A1 + B1.15), (A1 + B1.16), (A1 + B1.17), (A1 + B1.20), (A1 + B1.21), (A1 + B1.25), (A1 + B1.26), (A1 + B1.27), (A1 + B1.34), (A1 + B2.1), (A1 + B2.5), (A1 + B2.10), (A1 + B2.11), (A1 + B2.18), (A1 + B2.20), (A1 + B2.21), (A1 + B3.3), (A1 + B3.18), (A1 + B4.1), (A1 + B4.7), (A1 + B4.13), (A1 + B4.20), (A1 + B5.3), (A1 + B5.4), (A1 + B5.6), (A1 + B5.7), (A1 + B5.11), (A1 + B6.1), (A1 + B6.2), (A1 + B7.4), (A1 + B7.5), (A1 + B8.5), (A1 + B8.10), (A1 + B8.11), (A1 + B8.13), (A1 + B9.2), (A1 + B10.3), (A1 + B10.4), (A1 + B10.5), (A1 + B11.5), (A1 + B11.7), (A1 + B11.8), (A1 + B11.10), (A1 + B11.11), (A1 + B11.12),

(A2 + B1.1), (A2 + B1.6), (A2 + B1.14), (A2 + B1.15), (A2 + B1.16), (A2 + B1.17), (A2 + B1.20), (A2 + B1.21), (A2 + B1.25), (A2 + B1.26), (A2 + B1.27), (A2 + B1.34), (A2 + B2.1), (A2 + B2.5), (A2 + B2.10), (A2 + B2.11), (A2 + B2.18), (A2 + B2.20), (A2 + B2.21), (A2 + B3.3), (A2 + B3.18), (A2 + B4.1), (A2 + B4.7), (A2 + B4.13), (A2 + B4.20), (A2 + B5.3), (A2 + B5.4), (A2 + B5.6), (A2 + B5.7), (A2 + B5.11), (A2 + B6.1), (A2 + B6.2), (A2 + B7.4), (A2 + B7.5), (A2 + B8.5), (A2 + B8.10), (A2 + B8.11), (A2 + B8.13), (A2 + B9.2), (A2 + B10.3), (A2 + B10.4), (A2 + B10.5), (A2 + B11.5), (A2 + B11.7), (A2 + B11.8), (A2 + B11.10), (A2 + B11.11), (A2 + B11.12),

(A3 + B1.1), (A3 + B1.6), (A3 + B1.14), (A3 + B1.15), (A3 + B1.16), (A3 + B1.17), (A3 + B1.20), (A3 + B1.21), (A3 + B1.25), (A3 + B1.26), (A3 + B1.27), (A3 + B1.34), (A3 + B2.1), (A3 + B2.5), (A3 + B2.10), (A3 + B2.11), (A3 + B2.18), (A3 + B2.20), (A3 + B2.21), (A3 + B3.3), (A3 + B3.18), (A3 + B4.1), (A3 + B4.7), (A3 + B4.13), (A3 + B4.20), (A3 + B5.3), (A3 + B5.4), (A3 + B5.6), (A3 + B5.7), (A3 + B5.11), (A3 + B6.1), (A3 + B6.2), (A3 + B7.4), (A3 + B7.5), (A3 + B8.5), (A3 + B8.10), (A3 + B8.11), (A3 + B8.13), (A3 + B9.2), (A3 + B10.3), (A3 + B10.4), (A3 + B10.5), (A3 + B11.5), (A3 + B11.7), (A3 + B11.8), (A3 + B11.10), (A3 + B11.11), (A3 + B11.12),

(A4 + B1.1), (A4 + B1.6), (A4 + B1.14), (A4 + B1.15), (A4 + B1.16), (A4 + B1.17), (A4 + B1.20), (A4 + B1.21), (A4 + B1.25), (A4 + B1.26), (A4 + B1.27), (A4 + B1.34), (A4 + B2.1), (A4 + B2.5), (A4 + B2.10), (A4 + B2.11), (A4 + B2.18), (A4 + B2.20), (A4 + B2.21), (A4 + B3.3), (A4 + B3.18), (A4 + B4.1), (A4 + B4.7), (A4 + B4.13), (A4 + B4.20), (A4 + B5.3), (A4 + B5.4), (A4 + B5.6), (A4 + B5.7), (A4 + B5.11), (A4 + B6.1), (A4 + B6.2), (A4 + B7.4), (A4 + B7.5), (A4 + B8.5), (A4 + B8.10), (A4 + B8.11), (A4 + B8.13), (A4 + B9.2), (A4 + B10.3), (A4 + B10.4), (A4 + B10.5), (A4 + B11.5), (A4 + B11.7), (A4 + B11.8), (A4 + B11.10), (A4 + B11.11), (A4 + B11.12),

(A5 + B1.1), (A5 + B1.6), (A5 + B1.14), (A5 + B1.15), (A5 + B1.16), (A5 + B1.17), (A5 + B1.20), (A5 + B1.21), (A5 + B1.25), (A5 + B1.26), (A5 + B1.27) (A5 + B1.34), (A5 + B2.1), (A5 + B2.5), (A5 + B2.10), (A5 + B2.11), (A5 + B2.18), (A5 + B2.20), (A5 + B2.21), (A5 + B3.3), (A5 + B3.18), (A5 + B4.1), (A5 + B4.7), (A5 + B4.13), (A5 + B4.20), (A5 + B5.3), (A5 + B5.4), (A5 + B5.6), (A5 + B5.7), (A5 + B5.11), (A5 + B6.1), (A5 + B6.2), (A5 + B7.4), (A5 + B7.5), (A5 + B8.5), (A5 + B8.10), (A5 + B8.11), (A5 + B8.13), (A5 + B9.2), (A5 + B10.3), (A5 + B10.4), (A5 + B10.5), (A5 + B11.5), (A5 + B11.7), (A5 + B11.8), (A5 + B11.10), (A5 + B11.11), (A5 + B11.12),

(A6 + B1.1), (A6 + B1.6), (A6 + B1.14), (A6 + B1.15), (A6 + B1.16), (A6 + B1.17), (A6 + B1.20), (A6 + B1.21), (A6 + B1.25), (A6 + B1.26), (A6 + B1.27), (A6 + B1.34), (A6 + B2.1), (A6 + B2.5), (A6 + B2.10), (A6 + B2.11), (A6 + B2.18), (A6 + B2.20), (A6 + B2.21), (A6 + B3.3), (A6 + B3.18), (A6 + B4.1), (A6 + B4.7), (A6 + B4.13), (A6 + B4.20), (A6 + B5.3), (A6 + B5.4), (A6 + B5.6), (A6 + B5.7), (A6 + B5.11), (A6 + B6.1), (A6 + B6.2), (A6 + B7.4), (A6 + B7.5), (A6 + B8.5), (A6 + B8.10), (A6 + B8.11), (A6 + B8.13), (A6 + B9.2), (A6 + B10.3), (A6 + B10.4), (A6 + B10.5), (A6 + B11.5), (A6 + B11.7), (A6 + B11.8), (A6 + B11.10), (A6 + B11.11), (A6 + B11.12),

(A7 + B1.1), (A7 + B1.6), (A7 + B1.14), (A7 + B1.15), (A7 + B1.16), (A7 + B1.17), (A7 + B1.20), (A7 + B1.21), (A7 + B1.25), (A7 + B1.26), (A7 + B1.27), (A7 + B1.34), (A7 + B2.1), (A7 + B2.5), (A7 + B2.10), (A7 + B2.11), (A7 + B2.18), (A7 + B2.20), (A7 + B2.21), (A7 + B3.3), (A7 + B3.18), (A7 + B4.1), (A7 + B4.7), (A7 + B4.13), (A7 + B4.20),

(A7 + B5.3), (A7 + B5.4), (A7 + B5.6), (A7 + B5.7), (A7 + B5.11), (A7 + B6.1), (A7 + B6.2), (A7 + B7.4), (A7 + B7.5), (A7 + B8.5), (A7 + B8.10), (A7 + B8.11), (A7 + B8.13), (A7 + B9.2), (A7 + B10.3), (A7 + B10.4), (A7 + B10.5), (A7 + B11.5), (A7 + B11.7), (A7 + B11.8), (A7 + B11.10), (A7 + B11.11), (A7 + B11.12),

(A8 + B1.1), (A8 + B1.6), (A8 + B1.14), (A8 + B1.15), (A8 + B1.16), (A8 + B1.17), (A8 + B1.20), (A8 + B1.21), (A8 + B1.25), (A8 + B1.26), (A8 + B1.27), (A8 + B1.34), (A8 + B2.1), (A8 + B2.5), (A8 + B2.10), (A8 + B2.11), (A8 + B2.18), (A8 + B2.20), (A8 + B2.21), (A8 + B3.3), (A8 + B3.18), (A8 + B4.1), (A8 + B4.7), (A8 + B4.13), (A8 + B4.20), (A8 + B5.3), (A8 + B5.4), (A8 + B5.6), (A8 + B5.7), (A8 + B5.11), (A8 + B6.1), (A8 + B6.2), (A8 + B7.4), (A8 + B7.5), (A8 + B8.5), (A8 + B8.10), (A8 + B8.11), (A8 + B8.13), (A8 + B9.2), (A8 + B10.3), (A8 + B10.4), (A8 + B10.5), (A8 + B11.5), (A8 + B11.7), (A8 + B11.8), (A8 + B11.10), (A8 + B11.11), (A8 + B11.12),

(A9 + B1.1), (A9 + B1.6), (A9 + B1.14), (A9 + B1.15), (A9 + B1.16), (A9 + B1.17), (A9 + B1.20), (A9 + B1.21), (A9 + B1.25), (A9 + B1.26), (A9 + B1.27), (A9 + B1.34), (A9 + B2.1), (A9 + B2.5), (A9 + B2.10), (A9 + B2.11), (A9 + B2.18), (A9 + B2.20), (A9 + B2.21), (A9 + B3.3), (A9 + B3.18), (A9 + B4.1), (A9 + B4.7), (A9 + B4.13), (A9 + B4.20), (A9 + B5.3), (A9 + B5.4), (A9 + B5.6), (A9 + B5.7), (A9 + B5.11), (A9 + B6.1), (A9 + B6.2), (A9 + B7.4), (A9 + B7.5), (A9 + B8.5), (A9 + B8.10), (A9 + B8.11), (A9 + B8.13), (A9 + B9.2), (A9 + B10.3), (A9 + B10.4), (A9 + B10.5), (A9 + B11.5), (A9 + B11.7), (A9 + B11.8), (A9 + B11.10), (A9 + B11.11), (A9 + B11.12),

(A10 + B1.1), (A10 + B1.6), (A10 + B1.14), (A10 + B1.15), (A10 + B1.16), (A10 + B1.17), (A10 + B1.20), (A10 + B1.21), (A10 + B1.25), (A10 + B1.26), (A10 + B1.27), (A10 + B1.34), (A10 + B2.1), (A10 + B2.5), (A10 + B2.10), (A10 + B2.11), (A10 + B2.18), (A10 + B2.20), (A10 + B2.21), (A10 + B3.3), (A10 + B3.18), (A10 + B4.1), (A10 + B4.7), (A10 + B4.13), (A10 + B4.20), (A10 + B5.3), (A10 + B5.4), (A10 + B5.6), (A10 + B5.7), (A10 + B5.11), (A10 + 86.1), (A10 + B6.2), (A10 + B7.4), (A10 + B7.5), (A10 + B8.5), (A10 + B8.10), (A10 + B8.11), (A10 + B8.13), (A10 + B9.2), (A10 + B10.3), (A10 + B10.4), (A10 + B10.5), (A10 + B11.5), (A10 + B11.7), (A10 + B11.8), (A10 + B11.10), (A10 + B11.11), (A10 + B11.12),

(A11 + B1.1), (A11 + B1.6), (A11 + B1.14), (A11 + B1.15), (A11 + B1.16), (A11 + B1.17), (A11 + B1.20), (A11 + B1.21), (A11 + B1.25), (A11 + B1.26), (A11 + B1.27), (A11 + B1.34), (A11 + B2.1), (A11 + B2.5), (A11 + B2.10), (A11 + B2.11), (A11 + B2.18), (A11 + B2.20), (A11 + B2.21), (A11 + B3.3), (A11 + B3.18), (A11 + B4.1), (A11 + B4.7), (A11 + B4.13), (A11 + B4.20), (A11 + B5.3), (A11 + B5.4), (A11 + B5.6), (A11 + B5.7), (A11 + B5.11), (A11 + B6.1), (A11 + B6.2), (A11 + B7.4), (A11 + B7.5), (A11 + B8.5), (A11 + B8.10), (A11 + B8.11), (A11 + B8.13), (A11 + B9.2), (A11 + B10.3), (A11 + B10.4), (A11 + B10.5), (A11 + B111.5), (A11 + B11.7), (A11 + B11.8, (A11 + B11.10), (A11 + B11.11), (A11 + B11.12),

(A12 + B1.1), (A12 + B1.6), (A12 + B1.14), (A12 + B1.15), (A12 + B1.16), (A12 + B1.17), (A12 + B1.20), (A12 + B1.21), (A12 + B1.25), (A12 + B1.26), (A12 + B1.27), (A12 + B1.34), (A12 + B2.1), (A12 + B2.5), (A12 + B2.10), (A12 + B2.11), (A12 + B2.18), (A12 + B2.20), (A12 + B2.21), (A12 + B3.3), (A12 + B3.18), (A12 + B4.1), (A12 + B4.7), (A12 + B4.13), (A12 + B4.20), (A12 + B5.3), (A12 + B5.4), (A12 + B5.6), (A12 + B5.7), (A12 + B5.11), (A12 + B6.1), (A12 + B6.2), (A12 + B7.4), (A12 + B7.5), (A12 + B8.5), (A12 + B8.10), (A12 + B8.11), (A12 + B8.13), (A12 + B9.2), (A12 + B10.3), (A12 + B10.4), (A12 + B10.5), (A12 + B11.5), (A12 + B11.7), (A12 + B11.8), (A12 + B11.10), (A12 + B11.11), (A12 + B11.12),

(A13 + B1.1), (A13 + B1.6), (A13 + B1.14), (A13 + B1.15), (A13 + B1.16), (A13 + B1.17), (A13 + B1.20), (A13 + B1.21), (A13 + B1.25), (A13 + B1.26), (A13 + B1.27), (A13 + B1.34), (A13 + B2.1), (A13 + B2.5), (A13 + B2.10), (A13 + B2.11), (A13 + B2.18), (A13 + B2.20), (A13 + B2.21), (A13 + B3.3), (A13 + B3.18), (A13 + B4.1), (A13 + B4.7), (A13 + B4.13), (A13 + B4.20), (A13 + B5.3), (A13 + B5.4), (A13 + B5.6), (A13 + B5.7), (A13 + B5.11), (A13 + B6.1), (A13 + B6.2), (A13 + B7.4), (A13 + B7.5), (A13 + B8.5), (A13 + B8.10), (A13 + B8.11), (A13 + B8.13), (A13 + B9.2), (A13 + B10.3), (A13 + B10.4), (A13 + B10.5), (A13 + B11.5), (A13 + B11.7), (A13 + B11.8), (A13 + B11.10), (A13 + B11.11), (A13 + B11.12),

(A14 + B1.1), (A14 + B1.6), (A14 + B1.14), (A14 + B1.15), (A14 + B1.16), (A14 + B1.17), (A14 + B1.20), (A14 + B1.21), (A14 + B1.25), (A14 + B1.26), (A14 + B1.27), (A14 + B1.34), (A14 + B2.1), (A14 + B2.5), (A14 + B2.10), (A14 + B2.11), (A14 + B2.18), (A14 + B2.20), (A14 + B2.21), (A14 + B3.3), (A14 + B3.18), (A14 + B4.1), (A14 + B4.7), (A14 + B4.13), (A14 + B4.20), (A14 + B5.3), (A14 + B5.4), (A14 + B5.6), (A14 + B5.7), (A14 + B5.11), (A14 + B6.1), (A14 + B6.2), (A14 + B7.4), (A14 + B7.5), (A14 + B8.5), (A14 + B8.10), (A14 + B8.11), (A14 + B8.13), (A14 + B9.2), (A14 + B10.3), (A14 + B10.4), (A14 + B10.5), (A14 + B11.5), (A14 + B11.7), (A14 + B11.8), (A14 + B11.10), (A14 + B11.11), (A14 + B11.12),

(A15 + B1.1), (A15 + B1.6), (A15 + B1.14), (A15 + B1.15), (A15 + B1.16), (A15 + B1.17), (A15 + B1.20), (A15 + B1.21), (A15 + B1.25), (A15 + B1.26), (A15 + B1.27), (A15 + B1.34), (A15 + B2.1), (A15 + B2.5), (A15 + B2.10), (A15 + B2.11), (A15 + B2.18), (A15 + B2.20), (A15 + B2.21), (A15 + B3.3), (A15 + B3.18), (A15 + B4.1), (A15 + B4.7), (A15 + B4.13), (A15 + B4.20), (A15 + B5.3), (A15 + B5.4), (A15 + B5.6), (A15 + B5.7), (A15 + B5.11), (A15 + B6.1), (A15 + B6.2), (A15 + B7.4), (A15 + B7.5), (A15 + B8.5), (A15 + B8.10), (A15 + B8.11), (A15 + B8.13), (A15 + B9.2), (A15 + B10.3), (A15 + B10.4), (A15 + B10.5), (A15 + B11.5), (A15 + B11.7), (A15 + B11.8), (A15 + B11.10), (A15 + B11.11), (A15 + B11.12),

(A16 + B1.1), (A16 + B1.6), (A16 + B1.14), (A16 + B1.15), (A16 + B1.16), (A16 + B1.17), (A16 + B1.20), (A16 + B1.21), (A16 + B1.25), (A16 + B1.26), (A16 + B1.27), (A16 + B1.34), (A16 + B2.1), (A16 + B2.5), (A16 + B2.10), (A16 + B2.11), (A16 + B2.18), (A16 + B2.20), (A16 + B2.2y, (A16 + B3.3), (A16 + B3.18), (A16 + B4.1), (A16 + B4.7), (A16 + B4.13), (A16 + B4.20), (A16 + B5.3), (A16 + B5.4), (A16 + B5.6), (A16 + B5.7), (A16 + B5.11), (A16 + B6.1), (A16 + B6.2), (A16 + B7.4), (A16 + B7.5), (A16 + B8.5), (A16 + B8.10), (A16 + B8.11), (A16 + B8.13), (A16 + B9.2), (A16 + B10.3), (A16 + B10.4), (A16 + B10.5), (A16 + B11.5), (A16 + B11.7), (A16 + B11.8), (A16 + B11.10), (A16 + B11.11), (A16 + B11.12),

(A17 + B1.1), (A17 + B1.6), (A17 + B1.14), (A17 + B1.15), (A17 + B1.16), (A17 + B1.17), (A17 + B1.20), (A17 + B1.21), (A17 + B1.25), (A17 + B1.26), (A17 + B1.27), (A17 + B1.34), (A17 + B2.1), (A17 + B2.5), (A17 + B2.10), (A17 + B2.11), (A17 + B2.18), (A17 + B2.20), (A17 + B2.21), (A17 + B3.3), (A17 + B3.18), (A17 + B4.1), (A17 + B4.7), (A17 + B4.13), (A17 + B4.20), (A17 + B5.3), (A17 + B5.4), (A17 + B5.6), (A17 + B5.7), (A17 + B5.11), (A17 + B6.1), (A17 + B6.2), (A17 + B7.4), (A17 + B7.5), (A17 + B8.5), (A17 + B8.10), (A17 + B8.11), (A17 + B8.13), (A17 + B9.2), (A17 + B10.3), (A17 + B10.4), (A17 + B10.5), (A17 + B11.5), (A17 + B11.7), (A17 + B11.8), (A17 + B11.10), (A17 + B11.11), (A17 + B11.12).

Darüber hinaus kann jede der oben genannten Herbizid-Kombinationen (A) und (B) noch einen oder mehrere Safener enthalten, insbesondere einen Safener wie mefenpyr-diethyl (S2), isoxadifen-ethyl (S3), cyprosulfamide (S4) und cloquintocet-mexyl (S5). Dabei sind die oben genannten Aufwandmengenbereiche und Aufwandmengenverhältnisse jeweils bevorzugt.

Für alle diese interessanten (A) + (B) Kombinationen ist ein Safenerzusatz von Mefenpyr-diethyl (S2) besonders bevorzugt. Anstelle der Verbindung (A.1), (A.2), (A.3), (A.4),(A.5), (A.6), (A.7), (A.8), (A.9), (A.10), (A.11), (A.12), (A. 13), (A.14), (A.15), (A.16) oder (A.17) erhalten die Kombinationen dann jeweils die entsprechenden Zweier-Kombinationen: (A.1)+ (S2), (A.2)+ (S2), (A.3)+ (S2), (A.4)+ (S2), (A.5)+ (S2), (A.6)+ (S2), (A.7)+ (S2), (A.8)+ (S2), (A.9)+ (S2), (A.10)+ (S2), (A.11)+ (S2), (A.12)+ (S2), (A.13)+ (S2), (A.14)+ (S2), (A.15)+ (S2), (A.16)+ (S2), (A.17)+ (S2).

Für alle diese interessanten (A) + (B) Kombinationen ist ein Safenerzusatz von Isoxadifen-ethyl (S3) besonders bevorzugt. Anstelle der Verbindung (A.1), (A.2), (A.3), (A.4),(A.5), (A.6), (A.7), (A.8), (A.9), (A.10), (A.11), (A.12), (A. 13), (A.14), (A.15), (A.16) oder (A.17) erhalten die Kombinationen dann jeweils die entsprechenden Zweier-Kombinationen: (A.1)+ (S3), (A.2)+ (S3), (A.3)+ (S3), (A.4)+ (S3), (A.5)+ (S3), (A.6)+ (S3), (A.7)+ (S3), (A.8)+ (S3), (A.9)+ (S3), (A.10)+ (S3), (A.11)+ (S3), (A.12)+ (S3), (A.13)+ (S3), (A.14)+ (S3), (A15)+ (S3), (A.16)+ (S3), (A.17)+ (S3).

Für alle diese interessanten (A) + (B) Kombinationen ist ein Safenerzusatz von Cyprosulfamide (S4) besonders bevorzugt. Anstelle der Verbindung (A.1), (A.2), (A.3), (A.4),(A.5), (A.6), (A.7), (A.8), (A.9), (A.10), (A.11), (A.12), (A. 13), (A.14), (A.15), (A.16) oder (A.17) erhalten die Kombinationen dann jeweils die entsprechenden Zweier-Kombinationen: (A.1)+ (S4), (A.2)+ (S4), (A.3)+ (S4), (A.4)+ (S4), (A.5)+ (S4), (A.6)+ (S4), (A.7)+ (S4), (A.8)+ (S4), (A.9)+ (S4), (A.10)+ (S4), (A.11)+ (S4), (A.12)+ (S4), (A.13)+ (S4), (A.14)+ (S4), (A15)+ (S4), (A.16)+ (S4), (A.17)+ (S4).

Für alle diese interessanten (A) + (B) Kombinationen ist ein Safenerzusatz von Cloquintocet-mexyl (S5) besonders bevorzugt. Anstelle der Verbindung (A.1), (A.2), (A.3), (A.4),(A.5), (A.6), (A.7), (A.8), (A.9), (A.10), (A.11), (A. 12), (A.13), (A.14), (A.15), (A.16) oder (A.17) erhalten die Kombinationen dann jeweils die entsprechenden Zweier-Kombinationen: (A.1)+ (S5), (A.2)+ (S5), (A.3)+ (S5), (A.4)+ (S5), (A.5)+ (S5), (A.6)+ (S5), (A.7)+ (S5), (A.8)+ (S5), (A. 9)+ (S5), (A.10)+ (S5), (A.11)+ (S5), (A.12)+ (S5), (A.13)+ (S5), (A.14)+ (S5), (A.15)+ (S5), (A.16)+ (S5), (A.17)+ (S5).

Es kann sinnvoll sein, ein oder mehrere Herbizide (A) mit einem oder mehreren Herbiziden (B) zu kombinieren.

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.

Auf der Seite der monokotylen Unkrautarten werden z.B. Apera spica venti, Avena spp., Alopecurus spp.,

Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia Arten bei den perennierenden Unkräutern.

Werden die erfindungsgemäßen Herbizid-Kombinationen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Komponenten (A) und (B) so gering eingestellt werden können, daß ihre Bodenwirkung die Anforderung einer gezielten kurzfristigen residualen Unkrautwirkung erfüllt. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Bei der gemeinsamen Anwendung von Komponenten (A) und (B) treten in bevorzugter Ausführungsform überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsem, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Kombinationen eine ausgezeichnete herbizide Aktivität gegenüber mono- und dikotylen Schadpflanzen aufweisen, werden die Kulturpflanzen nur unwesentlich oder gar nicht geschädigt.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da Ernteverluste beim Lagern hierdurch verringert oder völlig verhindert werden können.

Aufgrund ihrer herbiziden und pflanzenwachstumsregulatorischen Eigenschaften können die erfindungsgemäßen Mittel auch zur Bekämpfung von Schadpflanzen in gentechnisch veränderten oder durch Mutationsselektion erhaltenen Kulturpflanzen eingesetzt werden. Diese Kulturpflanzen zeichnen sich in der Regel durch besondere vorteilhafte Eigenschaften aus, wie Resistenzen gegenüber herbiziden Mitteln oder Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind z.B. transgene Pflanzen mit erhöhtem Stärkegehalt oder veränderter Qualität der Stärke oder solche mit anderer Fettsäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten (siehe z.B. US 5,162,602; US 4,761,373; US 4,443,971). Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin auch ein Verfahren zur Bekämpfung von unerwünschtem Pflanzenwuchs (z.B. Schadpflanzen), vorzugsweise in Pflanzenkulturen wie Getreide (z.B. Weizen, Gerste, Roggen, Hafer, Kreuzungen davon wie Triticale, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere Herbizide des Typs (A) mit einem oder mehreren Herbiziden des Typs (B) und einem oder mehreren Herbiziden des Typs (C) gemeinsam oder getrennt, z.B. im Vorauflauf, Nachauflauf oder im Vor- und Nachauflauf, auf die Pflanzen, z.B. Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Gegenstand der Erfindung ist auch die Verwendung der neuen Kombinationen aus Komponenten (A) und (B) zur Bekämpfung von Schadpflanzen, vorzugsweise in Pflanzenkulturen.

Die erfindungsgemäßen herbiziden Mittel können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen.

Die erfindungsgemäßen Wirkstoffkombinationen können sowohl als Mischformulierungen der Komponenten (A) und (B) und gegebenenfalls mit weiteren agrochemischen Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Komponenten (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), wasserlösliche Konzentrate, emulgierbare Konzentrate (EC), Emulsionen (EW) wie Öl-in-Wasser- und Wasser-in-Öl-Emulsionen, versprühbare Lösungen oder Emulsionen, Suspensionskonzentrate (SC), Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen agrochemischen Wirkstoffen, wie anderen Herbiziden, Fungiziden, Insektiziden, sowie Safenem, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate (SC) können auf Wasser- oder Ölbasis sein. Sie können beispielsweise durch Naß-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls von weiteren Tensiden, wie sie z.B. oben bei den anderen Formulierungstypen bereits aufgeführt sind, herstellen.

Granulate können entweder durch Verdüsen des Wirkstoffs auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gewichtsprozent, insbesondere 2 bis 95 Gew.-%, Wirkstoffe der Komponenten A und/oder B, wobei je nach Formulierungsart folgende Konzentrationen üblich sind:

In Spritzpulvern beträgt die Wirkstoffkonzentration z.B. etwa 10 bis 95 Gew.-%, der Rest zu 100 Gew.-% besteht

aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Die herbizide Wirkung der erfindungsgemäßen Herbizid-Kombinationen kann z.B. durch oberflächenaktive Substanzen verbessert werden, vorzugsweise durch Netzmittel aus der Reihe der Fettalkohol-Polyglykolether.

Weiterhin ist bekannt, daß Fettalkohol-Polyglykolether wie nichtionische oder ionische Fettalkohol-Polyglykolether (z.B. Fettalkohol-Polyglykolethersulfate) auch als Penetrationshilfsmittel und Wirkungsverstärker für eine Reihe anderer Herbizide, unter anderem auch für Herbizide aus der Reihe der Imidazolinone geeignet sind (siehe z.B. EP-A-0502014).

Die herbizide Wirkung der erfindungsgemäßen Herbizid-Kombinationen kann auch durch die Verwendung von Pflanzenölen verstärkt werden. Unter dem Begriff Pflanzenöle werden Öle aus ölliefemden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von $C_{10}$-$C_{22}$-, vorzugsweise $C_{12}$-$C_{20}$-Fettsäuren. Die $C_{10}$-$C_{22}$-Fettsäureester sind beispielsweise Ester ungesättigter oder gesättigter $C_{10}$-$C_{22}$-Fettsäuren, insbesondere mit gerader Kohlenstoffatomzahl, z.B. Erucasäure, Laurinsäure, Palmitinsäure und insbesondere $C_{18}$-Fettsäuren wie Stearinsäure, Ölsäure, Linolsäure oder Linolensäure.

Beispiele für $C_{10}$-$C_{22}$-Fettsäure-Ester sind Ester, die durch Umsetzung von Glycerin oder Glykol mit den $C_{10}$-$C_{22}$-Fettsäuren erhalten werden, wie sie z.B. in Ölen aus ölliefemden Pflanzenarten enthalten sind, oder $C_1$-$C_{20}$-Alkyl-$C_{10}C_{22}$-Fettsäure-Ester, wie sie z.B. durch Umesterung der vorgenannten Glycerin- oder Glykol-$C_{10}$-$C_{22}$-Fettsäure-Ester mit $C_1$-$C_{20}$-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als $C_1$-$C_{20}$-Alkyl-$C_{10}$-$C_{22}$-Fettsäure-Ester bevorzugt sind Methylester, Ethylester, Propylester, Butylester, 2-ethyl-hexylester und Dodecylester. Als Glykol- und Glycerin-$C_{10}$-$C_{22}$-Fettsäure-Ester bevorzugt sind die einheitlichen oder gemischten Glykolester und Glycerinester von $C_{10}$-$C_{22}$-Fettsäuren, insbesondere solcher Fettsäuren mit gerader Anzahl an Kohlenstoffatomen, z.B. Erucasäure, Laurinsäure, Palmitinsäure und insbesondere $C_{18}$-Fettsäuren wie Stearinsäure, Ölsäure, Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten®/Destiny® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Die vorliegende Erfindung umfasst in einer weiteren Ausführungsform Kombinationen von Komponenten (A) und (B) mit den vorgängig genannten Pflanzenölen wie Rapsöl, bevorzugt in Form kommerziell erhältlicher ölhaltiger Formulierungszusatzstoffe, insbesondere solcher auf Basis von Rapsöl wie Haste® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester).

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Komponenten (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden.

**Herstellungsbeispiele**

Beispiel A.1

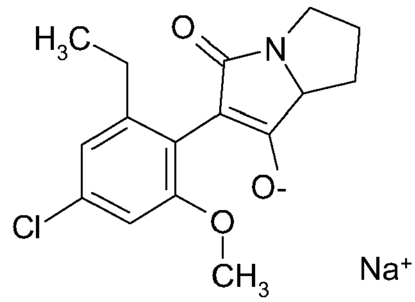

0,42ml einer 30%-igen Natriummethylatlösung vorgelegt und 0,5g der Verbindung gemäß Bsp. I-1-a-16 (WO 04-080962) in 5 ml Methanol zugeben, 1h bei Raumtemperatur rühren, das Lösungsmittel abrotieren und trocknen.
Ausbeute: 0,52g (97% d. Theorie)
$^1$H-NMR (300 MHz, $D_2O$): δ =3.93 (m, 1H, C(5)H-N),
6.92 und 6.97 (d, je 1H, Ar-H) ppm.

In Analogie zu Beispiel A.1 und gemäß den allgemeinen Angaben zur Herstellung von Verbindungen der Formel (I) erhält man folgende Beispiele:

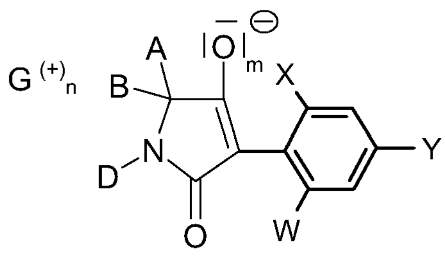

(I)

| Bsp. Nr. | W | X | Y | D | A | B | $G^{(+)}_n$ | m | Fp.˚C | Isomer |
|---|---|---|---|---|---|---|---|---|---|---|
| A.2 | $C_2H_5$ | $OCH_3$ | Cl | $-(CH_2)_3-$ | | H | $Li^+$ | 1 | | - |
| A.3 | $C_2H_5$ | $OCH_3$ | Cl | $-(CH_2)_3-$ | | H | $K^+$ | 1 | | - |
| A.4 | $C_2H_5$ | $OCH_3$ | Cl | H | 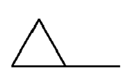 | $CH_3$ | $Na^+$ | 1 | | - |
| A.5 | $C_2H_5$ | $OCH_3$ | Cl | H | 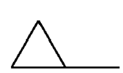 | $CH_3$ | $K^+$ | 1 | | - |
| A.6 | $C_2H_5$ | $OC_2H_5$ | Cl | H | $-(CH_2)_2-CHOCH_3-(CH_2)_2-$ | | Na+ | 1 | | cis |
| A.7 | $C_2H_5$ | $OCH_3$ | Cl | H | $-(CH_2)_2-CHOCH_3-(CH_2)_2-$ | | Na+ | 1 | | cis |

(fortgesetzt)

| Bsp. Nr. | **W** | **X** | Y | D | A | B | $G^{(+)}_n$ | m | **Fp.˚C** | Isomer |
|---|---|---|---|---|---|---|---|---|---|---|
| A.8 | $C_2H_5$ | $OCH_3$ | Cl | H | $-(CH_2)_2-O-(CH_2)_2-$ | | Na+ | 1 | 88 | - |
| A.9 | $C_2H_5$ | $OCH_3$ | Cl | H | $CH_3$ | $CH_3$ | Na+ | 1 | | - |
| A.10 | $C_2H_5$ | $OC_2H_5$ | Cl | H | $-(CH_2)_2-CHOCH_3-(CH_2)_2-$ | | $K^+$ | 1 | | cis |
| A.11 | $C_2H_5$ | $OCH_3$ | Cl | H | $-(CH_2)_2-CHOCH_3-(CH_2)_2-$ | | $K^+$ | 1 | | cis |
| A.12 | $C_2H_5$ | $OCH_3$ | Cl | H | $-(CH_2)_2-O-(CH_2)_2-$ | | $K^+$ | 1 | | cis |
| A.13 | $C_2H_5$ | $OCH_3$ | Cl | H | $CH_3$ | $CH_3$ | $K^+$ | 1 | | - |
| A.14 | $C_2H_5$ | $OC_2H_5$ | Cl | H | $-(CH_2)_2-CHOCH_3-(CH_2)_2-$ | | $Li^+$ | 1 | | cis |
| A.15 | $C_2H_5$ | $OCH_3$ | Cl | H | $-(CH_2)_2-CHOCH_3-(CH_2)_2-$ | | $Li^+$ | 1 | | cis |
| A.16 | $C_2H_5$ | $OCH_3$ | Cl | H | $-(CH_2)_2-O-(CH_2)_2-$ | | $Li^+$ | 1 | | - |
| A.17 | $C_2H_5$ | $OCH_3$ | Cl | H | $CH_3$ | $CH_3$ | $Li^+$ | 1 | | - |

**Biologische Beispiele**

Herbizide Wirkung (Feldversuche)

Die Samen oder Rhizomstücke von typischen im Boden vorhandenen Schadpflanzen wurden unter natürlichen Freilandbedingungen herangezogen.

Die Behandlung mit den erfindungsgemäßen Mitteln beziehungsweise mit den einzeln angewandten Komponenten (A) und (B) erfolgte nach dem Auflaufen der Schad- und der Kulturpflanzen in der Regel im 2- bis 4-Blattstadium. Die Applikation der als SL oder WP formulierten Wirkstoffe oder Wirkstoffkombinationen erfolgte im Nachauflauf. Nach 4 Wochen erfolgte eine optische Bonitur im Vergleich zu einer unbehandelten Vergleichsgruppe. Dabei zeigte sich, daß die erfindungsgemäßen Mittel eine synergistische herbizide Wirkung gegen wirtschaftlich bedeutende mono- und dikotyle Schadpflanzen aufweisen, d.h. daß die erfindungsgemäßen Mittel meist eine höhere, teilweise deutlich höhere herbizide Wirkung aufweisen als es der Summe der Wirkungen der Einzelherbizide entspricht. Darüber hinaus liegen die herbiziden Wirkungen der erfindungsgemäßen Mittel über den

Erwartungswerten nach nach der Additiv- und Colby-Methode. Die Kulturpflanzen wurden hingegen durch die Behandlung nicht oder nur unwesentlich geschädigt.

Wenn die beobachteten Wirkungswerte der Mischungen bereits die formale Summe der Werte zu den Versuchen mit Einzelapplikationen übertreffen, dann übertreffen sie den Erwartungswert nach Colby ebenfalls, der sich nach folgender Formel errechnet (vgl. S. R. Colby; in Weeds 15 (1967) S. 20 bis 22):

$$E = A + B - \frac{A \times B}{100}$$

Dabei bedeuten:

A, B = jeweils Wirkung der Komponente A bzw.B in Prozent bei einer Dosierung von a bzw. b Gramm ai/ha.
E = Erwartungswert in % bei einer Dosierung von a+b Gramm ai/ha.

Die beobachteten Werte der nachfolgenden Versuchsbeispiele liegen über den Erwartungswerten nach Colby.

Tabelle 1:

| Herbizid | Dosierung | Herbizide Wirkung gegen CHEAL | Wert nach Colby |
|---|---|---|---|
| A6 | 250 | 83% | |
| B11.10 | 5 | 0% | |

(fortgesetzt)

| Herbizid | Dosierung | Herbizide Wirkung gegen CHEAL | Wert nach Colby |
|---|---|---|---|
| A6 + B11.10 | 250 + 5 | 90 % | 83 |
| B : Glufosinate<br>CHEAL - Chenopodium album | | | |

**Patentansprüche**

1. Herbizid-Kombinationen, **gekennzeichnet durch** einen wirksamen Gehalt an Komponenten (A) und (B), wobei

(A) ein oder mehrere Herbizide aus der Gruppe der Verbindungen der Formel (I) (Komponente A) bedeutet

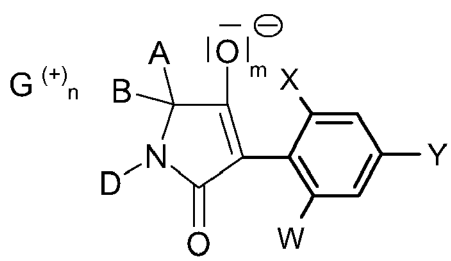

(I)

in welcher

X für Methoxy oder Ethoxy steht
W für Methyl oder Ethyl steht,
Y für Chlor steht,
G für Lithium, Natrium, oder Kalium steht,
m für die Zahl 1 steht,
n für die Zahl 1 steht,
A für $C_1$-$C_4$-Alkyl oder Cyclopropyl steht,
B für Methyl steht,
A, B und das Kohlenstoffatom an das sie gebunden sind, für gesättigtes $C_5$-$C_6$-Cycloalkyl, in welchem gegebenenfalls ein Ringglied **durch** Sauerstoff ersetzt ist und welches gegebenenfalls einfach **durch** Methyl, Methoxy oder Ethoxy substituiert ist, stehen
D für Wasserstoff steht,

oder
A und D gemeinsam für $C_3$-$C_4$-Alkylidenylgruppe stehen.
und
B) ein oder mehrere Verbindungen (Komponente B) aus den Gruppen B1 bis B12 bedeutet, welche die folgenden Verbindungen umfassen

B1 Inhibitoren der Biosynthese von verzweigten Aminosäuren:

amidosulfuron (B1.1) und dessen Natriumsalz amidosulfuron-sodium (B1.2), chlorimuron (B1.3) und dessen Ester und Salze wie chlorimuron-ethyl (B1.4),
flazasulfuron (B1.5) und dessen Ester und Salze,
flucarbazone (B1.6) und dessen Salze wie flucarbazone-sodium (B1.7),
flupyrsulfuron (B1.8) und dessen Ester und Salze wie
flupyrsulfuron-methyl-sodium (B1.9),
imazamethabenz (B1.10) und dessen Ester und Salze wie imazamethabenz-methyl (B1.11),
imazamox (B1.12) und dessen Ester und Salze,
imazypyr (B1.13) und dessen Ester und Salze,

iodosulfuron (B1.14) und dessen Ester und Salze wie iodosulfuron-methyl-sodium (B1.15),
mesosulfuron (B1.16) und dessen Ester und Salze wie mesosulfuron-methyl (B1.17) und mesosulfuron-methyl-sodium (B1.18),
metsulfuron (B1.19) und dessen Ester und Salze,
propoxycarbazone (B1.20) und dessen Salze wie propoxycarbazone-sodium (B1.21),
sulfometuron (B1.22) und dessen Ester und Salze wie sulfometuron-methyl (B1.23),
sulfosulfuron (B1.24) und dessen Salze,
thiencarbazone (B1.25) und dessen Ester und Salze wie
thiencarbazone-methyl (B1.26)
thifensulfuron (B1.27) und dessen Ester und Salze wie thifensulfuron-methyl (B1.28), triasulfuron (B1.29) und dessen Salze,
tribenuron (B1.30) und dessen Ester und Salze wie tribenuron-methyl (B1.31),
penoxsulam (B 1.32),
pyroxsulam (B 1.33),
ethametsulfuron-methyl (B 1.34),
ethoxysulfuron (B1.35), foramsulfuron (B1.36) trifloxysulfuron (B1.37), pyrimisulfan (B1.38),
bispyrac-sodium (B1.39), bensulfuron (B1.40),
imazamox (B1.41), imazethapyr (B1.42), imazapic (B1.43), imazapyr (B1.44),
pyrithiobac (B1.45), florasulam (B1.46), diclosulam (B1.47), chlorsulfuron (B1.48),
sulfosulfuron (B1.49),

B2 Inhibitoren des Photosynthese Elektronen Transports:

amicarbazone (B2.1) und dessen Salze,
atrazine (B2.2),
bromacil (B2.3) und dessen Salze wie bromacil-sodium (B2.4),
bromoxynil (B2.5) und dessen Ester und Salze wie bromoxynil-heptanoate (B2.6), bromoxyniloctanoate (B2.7) und bromoxynil-potassium (B2.8),
diuron (B2.9),
ioxynil (B2.10) und dessen Ester und Salze wie
ioxynil-octanoate (B 2.11) und ioxynil-sodium (B2.12),
isoproturon (B2.13), metribuzin (B2.14), simazine (B2.15), tebuthiuron (B2.16),
terbuthylazine (B2.17),
phenmedipham (B 2.18),
dismedipham (B 2.19),
dimefuron (B 2.20),
pyridate (B 2.21),
metamitron (B2.22), bentazon (B2.23),

B3 Synthetische Auxine:

2,4-D (B3.1) und dessen Ester und Salze wie 2,4-D-sodium (B3.2),
clopyralid (B3.3) und dessen Ester und Salze wie clopyralid-methyl (B3.4),
dicamba (B3.5) und dessen Ester und Salze wie dicamba-methyl (B3.6),
fluroxypyr (B3.7) und dessen Ester und Salze wie fluroxypyr-meptyl (B3.8)
picloram (B3.9) und dessen Ester und Salze wie picloram-methyl (B3.10),
quinclorac (B3.11), quinmerac (B3.12)
triclopyr (B3.13) und dessen Ester und Salze wie triclopyr-ethyl (B3.14),
MCPA (B3.15), CMPP (B3.16), DP (B3.17),
aminopyralid (B 3.18),

B4 Inhibitoren der Fettsäurebiosynthese:

clodinafop (B4.1) und dessen Ester wie clodinafop-propargyl (B4.2),
cyhalofop (B4.3) und dessen Ester wie cyhalofop-butyl (B4.4),
diclofop (B4.5) und dessen Ester wie diclofop-methyl (B4.6),
fenoxaprop (B4.7) und dessen Ester wie fenoxaprop-P-ethyl (B4.8),
fluazifop (B4.9) und dessen Ester wie fluazifop-P-butyl (B4.10),

haloxyfop (B4.11) und dessen Ester wie haloxyfop-P-methyl (B4.12),
pinoxaden (B4.13),
quizalofop (B4.14) und dessen Ester wie quizalofop-P-ethyl (B4.15),
clethodim (B4.16), sethoxydim (B4.17), tepraloxydim (B4.18),
tralkoxydim (B 4.19),
ethofumesate (B 4.20), clefoxydifm (B4.21),

B5 Inhibitoren der Zellteilung:

acetochlor (B5.1), alachlor (B5.2), fentrazamide (B5.3), flufenacet (B5.4),
isoxaben (B5.5), mefenacet (B5.6), metazachlor (B5.7),
metolachlor (B5.8) und sein (S)-Stereoisomer S-metolachlor (B5.9),
thiazopyr (B5.10),
naproamide (B 5.11), pyroxasulfone (B5.12), dimethenamid (B5.13), carfenstrole (B5.14),

B6 Inhibitoren der Fettsäurebiosynthese-Carotinoidbiosynthese:

diflufenican (B6.1), clomazone (B6.2), picolinafen (B6.3), beflubutamid (B6.4),

B7 Inhibitoren der Hydroxyphenylpyruvat-Dioxygenase:

isoxaflutole (B7.1), mesotrione (B7.2), sulcotrione (B7.3),
pyrasulfotole (B7.4) und dessen Salze,
tembotrione (B7.5) und dessen Salze, tefuryltrione (B7.6) und dessen Salze,
topramezone (B7.7), benzobicyclon (B7.8), SYN449 (B7.9),

B8 Inhibitoren der Protoporphyrinogenoxidase:

azafenidin (B8.1), butafenacil (B8.2),
carfentrazone (8.3) und dessen Ester und Salze wie carfentrazone-ethyl (B8.4),
flumiclorac (B8.5) und dessen Ester und Salze wie flumiclorac-pentyl (B8.6),
fomesafen (B8.7) und dessen Salze wie fomesafen-sodium (B8.8),
lactofen (B8.9), oxadiargyl (B8.10), oxyfluorfen (B8.11),
SYN523 (B 8.12), aclonifen (B8.13), sulfentrazone (B8.14),

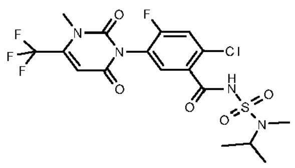
(B8.15),

B9 Inhibitoren der Carotinoidbiosynthese:

flurtamone (B9.2), norflurazon (B9.3),

B10 Inhibitoren des Mikrotubuli-Aufbaus:

oryzalin (B10.1), pendimethalin (B10.2), trifluralin (B10.3),
carbetamide (B 10.4),
propyzamide (B 10.5),

B11 Andere

diquat (B11.1) und dessen Salze wie diquat dibromide (B11.2),
paraquat (B11.3) und dessen Salze wie paraquat dichloride (B11.4),
naproanilide (B11.5), pyroxasulfone (B11.6), glyphosate (B11.7) und dessen Salze wie glyphosatetrimesium (B11.8) und sulfosate (B11.9), glufosinate (B11.10) und dessen Salze wie glufosinateammonium (B11.11) sowie deren optische Isomere wie phosphinotricin (B11.12),

B12 Inhibitoren der Cellulosebiosynthese:

2-Amino-4-(4-phenyl-1-cyclobutyl-butylamino)-6-(1-fluor-1-methyl-ethyl)-1,3,5-triazin (B12.1), 2-Amino-4-[(1*R*,2*S*)-2,6-dimethyl-indan-1-ylamino]-6-[(1*RS*)-1-fluorethyl]-1,3,5-triazin (B12.2), 2-Amino-4-[(1*R*, 2*R*)-2,6-dimethyl-indan-1-ylamino]-6-[(1*RS*-1-fluorethyl]-1,3,5-triazin (B12.3), 2-Amino-4-[(1*R*,2*S*)-2,6-dimethyl-indan-1-ylamino]-6-[(1*R*)-1-fluor-ethyl]-1,3,5-triazin (B12.4), 2-Amino-4-[(1*R*,2*R*)-2,6-dimethyl-indan-1-ylamino]-6-[(1*R*)-1-fluor-ethyl]-1,3,5-triazin (B12.5), 2-Amino-4-[(1*R*,2*S*)-2,6-dimethyl-indan-1-ylamino]-6-[(1*S*)-1-fluor-ethyl]-1,3,5-triazin (B12.6), triaziflam (B12.7), diclobenil (B12.8).

**2.** Herbizid-Kombination gemäß Anspruch 1, zusätzlich enthaltend einen oder mehrere Safener.

**3.** Verfahren zur Bekämpfung von unerwünschtem Pflanzenwuchs, worin die Komponenten (A) und (B), definiert gemäß Anspruch 1, gemeinsam oder getrennt auf die Pflanzen, Pflanzenteile, Pflanzensamen oder die Fläche auf der die Pflanzen wachsen, appliziert werden.

**4.** Verfahren gemäß Anspruch 3 zur selektiven Bekämpfung von Schadpflanzen in Pflanzenkulturen.

**5.** Verfahren gemäß Anspruch 3, worin die Pflanzenkulturen gentechnisch verändert oder durch Mutationsselektion erhalten sind.

**6.** Verwendung der Herbizid-Kombinationen gemäß Anspruch 1 zur Bekämpfung von Schadpflanzen.

Europäisches Patentamt

# EUROPÄISCHER RECHERCHENBERICHT

Nummer der Anmeldung
EP 07 11 2053

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2006/024411 A (BAYER CROPSCIENCE GMBH [DE]; FISCHER REINER [DE]; FEUCHT DIETER [DE];) 9. März 2006 (2006-03-09)<br>* Verbindungen A.1, A.4 *<br>* Verbindungen B3.1, B3.3, B3,6, B.3.9, B3.11,B3.18 .19, 18, *<br>* Seite 24, Zeile 18 - Seite 25, Zeile 8 *<br>* Seite 26, Zeile 8 - Zeile 24 *<br>* Anspruch 4 *<br>* Seite 43 *<br>----- | 1-6 | INV.<br>A01N43/90<br>A01P13/00 |
| A,D | WO 2004/080962 A (BAYER CROPSCIENCE AG [DE]; FISCHER REINER [DE]; KUNZ KLAUS [DE]; LEHR)<br>23. September 2004 (2004-09-23)<br>* Seite 141, Zeile 27 - Zeile 30 *<br>* Anspruch 1 *<br>Verbindungen der Formel I-1-a<br>----- | 1-6 | |
| A,D | WO 03/013249 A (BAYER CROPSCIENCE AG [DE]; FISCHER REINER [DE]; DREWES MARK WILHELM [D) 20. Februar 2003 (2003-02-20)<br>das ganze Dokument<br>----- | 1-6 | RECHERCHIERTE SACHGEBIETE (IPC)<br>A01N |

~~Der vorliegende Recherchenbericht wurde für alle Patentan~~sprüche erstellt

| Recherchenort | Abschlußdatum der Recherche | Prüfer |
|---|---|---|
| Den Haag | 27. Mai 2008 | Fort, Marianne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

Nummer der Anmeldung
EP 07 11 2053

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-6 (teilweise)

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt

**MANGELNDE EINHEITLICHKEIT DER ERFINDUNG ERGÄNZUNGSBLATT B**

Nummer der Anmeldung

EP 07 11 2053

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) eine oder mehrere Verbindungen aus der Gruppe B1 bedeutet

---

2. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) eine oder mehrere Verbindungen aus der Gruppe B2 bedeutet

---

3. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) eine oder mehrere Verbindungen aus der Gruppe B3 bedeutet

---

4. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) eine oder mehrere Verbindungen aus der Gruppe B4 bedeutet

---

5. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) eine oder mehrere Verbindungen aus der Gruppe B5 bedeutet

---

6. Ansprüche: 1-6(teilweise)

Europäisches
Patentamt

**MANGELNDE EINHEITLICHKEIT
DER ERFINDUNG
ERGÄNZUNGSBLATT B**

Nummer der Anmeldung
EP 07 11 2053

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet
und (B) eine oder mehrere Verbindungen aus der Gruppe B6 bedeutet

---

7. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet
und (B) eine oder mehrere Verbindungen aus der Gruppe B7 bedeutet

---

8. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet
und (B) eine oder mehrere Verbindungen aus der Gruppe B8 bedeutet

---

9. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet
und (B) eine oder mehrere Verbindungen aus der Gruppe B9 bedeutet

---

10. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet
und (B) eine oder mehrere Verbindungen aus der Gruppe B10 bedeutet

---

11. Ansprüche: 1-6(teilweise)

Europäisches Patentamt

**MANGELNDE EINHEITLICHKEIT DER ERFINDUNG ERGÄNZUNGSBLATT B**

Nummer der Anmeldung

EP 07 11 2053

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) (B11.1) oder (B11.2) bedeutet

---

12. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) (B11.3) oder (B11.4) bedeutet

---

13. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) (B11.5) bedeutet

---

14. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) (B11.6) bedeutet

---

15. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) (B11.7) , (B11.8) oder (B11.9) bedeutet

---

16. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) (B11.10), (B11.11) oder (B11.12) bedeutet

---

Europäisches Patentamt

**MANGELNDE EINHEITLICHKEIT DER ERFINDUNG ERGÄNZUNGSBLATT B**

Nummer der Anmeldung

EP 07 11 2053

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

17. Ansprüche: 1-6(teilweise)

Herbizide-Kombinationen, gekennzeichnet durch einen wirksamen Gehalt an Komponenten (A) und (B), wobei (A) ein oder mehrer Herbizide aus der Gruppe der Verbindungen der Formel (I) bedeutet und (B) eine oder mehrere Verbindungen aus der Gruppe B12 bedeutet

---

**ANHANG ZUM EUROPÄISCHEN RECHERCHENBERICHT ÜBER DIE EUROPÄISCHE PATENTANMELDUNG NR.** EP 07 11 2053

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2008

| Im Recherchenbericht angeführtes Patentdokument | Datum der Veröffentlichung | Mitglied(er) der Patentfamilie | Datum der Veröffentlichung |
|---|---|---|---|
| WO 2006024411 A | 09-03-2006 | AR 053645 A1 | 16-05-2007 |
| | | AU 2005279428 A1 | 09-03-2006 |
| | | BR PI0514720 A | 24-06-2008 |
| | | CA 2577945 A1 | 09-03-2006 |
| | | CN 101010006 A | 01-08-2007 |
| | | DE 102004041529 A1 | 02-03-2006 |
| | | EP 1784075 A2 | 16-05-2007 |
| | | JP 2008510752 T | 10-04-2008 |
| | | KR 20070047821 A | 07-05-2007 |
| | | US 2008167188 A1 | 10-07-2008 |
| WO 2004080962 A | 23-09-2004 | AU 2004220445 A1 | 23-09-2004 |
| | | BR PI0408378 A | 21-03-2006 |
| | | CA 2518620 A1 | 23-09-2004 |
| | | CN 1787994 A | 14-06-2006 |
| | | CN 101195599 A | 11-06-2008 |
| | | DE 10311300 A1 | 23-09-2004 |
| | | EP 1606254 A1 | 21-12-2005 |
| | | JP 2006520338 T | 07-09-2006 |
| | | KR 20050108385 A | 16-11-2005 |
| | | US 2007015664 A1 | 18-01-2007 |
| WO 03013249 A | 20-02-2003 | BR 0211829 A | 08-09-2004 |
| | | CA 2456776 A1 | 20-02-2003 |
| | | CN 1564660 A | 12-01-2005 |
| | | DE 10139465 A1 | 20-02-2003 |
| | | EP 1418811 A1 | 19-05-2004 |
| | | JP 2004537570 T | 16-12-2004 |
| | | RU 2320169 C2 | 27-03-2008 |
| | | UA 78716 C2 | 25-04-2007 |
| | | US 2005054535 A1 | 10-03-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 04080962 A
- WO 03013249 A
- WO 06024411 A
- EP 07009766 A
- US 5162602 A
- US 4761373 A
- US 4443971 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 0502014 A


### In der Beschreibung aufgeführte Nicht-Patentliteratur


- The Pesticide Manual. British Crop Protection Council, 2003
- **SAMBROOK et al.** Molecular Cloning, A Laboratory Manual. Cold Spring Harbor Laboratory Press, 1989
- **WINNACKER.** Gene und Klone. VCH, 1996
- **CHRISTOU.** *Trends in Plant Science,* 1996, vol. 1, 423-431
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie. C. Hauser Verlag München, 1986, vol. 7
- **VAN VALKENBURG.** Pesticide Formulations. Marcel Dekker, 1973
- **K. MARTENS.** Spray Drying Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons
- **MARSDEN.** Solvents Guide. Interscience, 1950
- **MCCUTCHEON’S.** Detergents and Emulsifiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesellschaft, 1976
- **VERFAHREN.** Spray-Drying Handbook. G. Goodwin Ltd, 1979
- **J.E. BROWNING.** Agglomeration. *Chemical and Engineering,* 1967, 147 ff
- Perry’s Chemical Engineer’s Handbook. McGraw-Hill, 1973, 8-57
- **G.C. KLINGMAN.** Weed Control as a Science. John Wiley and Sons, Inc, 1961, 81-96
- **J.D. FREYER ; S.A. EVANS.** Weed Control Handbook. Blackwell Scientific Publications, 1968, 101-103
- Römpp Chemie Lexikon. Thieme Verlag, vol. 2, 1343
- **S. R. COLBY.** *Weeds,* 1967, vol. 15, 20-22